# EUROPÄISCHE PATENTSCHRIFT

(11) **EP 3 983 716 B1**
(45) Veröffentlichungstag und Bekanntmachung des Hinweises auf die Patenterteilung: **18.09.2024**
(21) Anmeldenummer: 20732570.5
(22) Anmeldetag: 11.06.2020
(51) Int. Cl.: F17C 7/00, F17C 7/02, F17C 9/00

(54) **KRAFTSTOFFVERSORGUNGSSYSTEM ZUR VORRANGIGEN VERSORGUNG EINER ENERGIEUMWANDLUNGSVORRICHTUNG AUS EINEM GASPOLSTER EINES KRAFTSTOFFBEHÄLTERS, IN DEM GASFÖRMIGER KRAFTSTOFF IN VERFLÜSSIGTER FORM BEVORRATET IST**
FUEL SUPPLY SYSTEM FOR PRIMARY SUPPLY OF AN ENERGY CONVERSION DEVICE FROM A GAS CUSHION OF A FUEL TANK IN WHICH GASEOUS FUEL IS STORED IN LIQUEFIED FORM
SYSTÈME D'ALIMENTATION EN CARBURANT POUR L'ALIMENTATION PRIORITAIRE D'UN DISPOSITIF DE CONVERSION D'ÉNERGIE À PARTIR D'UN COUSSIN DE GAZ D'UN RÉSERVOIR DE CARBURANT DANS LEQUEL EST STOCKÉ DU CARBURANT GAZEUX SOUS FORME LIQUÉFIÉE

(30) Priorität: 14.06.2019 DE 102019116255; 14.06.2019 DE 102019116220
(43) Veröffentlichungstag der Anmeldung: 20.04.2022
(73) Patentinhaber: VOLKSWAGEN AG, 38440 Wolfsburg (DE)
(72) Erfinder: BIPPES, Michael, 38112 Braunschweig (DE)
(74) Vertreter: Gulde & Partner
(86) Internationale Anmeldenummer: PCT/EP2020/066217
(87) Internationale Veröffentlichungsnummer: WO 2020/249681

(56) Entgegenhaltungen:
- DE-A1- 102005 016 006
- DE-A1- 102008 030 564
- SE-A1- 1 850 671
- US-A1- 2011 257 869
- US-A1- 2011 314 839
- US-A1- 2012 060 935
- US-A1- 2015 120 166
- US-A1- 2016 017 835

## Beschreibung

Die Erfindung betrifft ein Verfahren und ein Kraftstoffversorgungssystem zur Kraftstoffversorgung einer Energieumwandlungsvorrichtung mit einem in einem Kraftstoffbehälter gespeicherten verflüssigten gasförmigen Kraftstoff, der im Kraftstoffbehälter in einer Flüssigphase und in einer Gasphase vorliegt und im Kraftstoffbehälter ein Gaspolster bildet, wobei der Kraftstoffbehälter Entnahmearmaturen zur getrennten Entnahme der Flüssigphase und der Gasphase und eine Kraftstoffzuführungsanlage aufweist.

LNG (Flüssigerdgas - liquefied natural gas) nimmt im Rahmen der Energiewende als Kraftstoff eine zunehmende Bedeutung ein. Es liegt als tiefkaltes, verflüssigtes Gas im Tank vor. Durch Temperatureinwirkung oder Standzeiten kann es zu einem wesentlichen Druckaufbau überhalb der Flüssigphase kommen. Steigt der Druck zum Beispiel durch längere Standzeiten und/oder externe Wärmeeinwirkung zu stark an, so wird der Druck des Gaspolsters über eine Druckentlastungsvorrichtung, gängigerweise ein Sicherheitsventil, abgebaut. Hierdurch kommt es zu einem Verlust an Kraftstoff und damit der Einschränkung der Reichweite sowie zusätzlichen Kosten in Form von verlorenem Kraftstoff. Es ist bekannt, eine Kühlung des verflüssigten Gases durch eine Kühlanlage vorzunehmen oder das Gaspolster rückzuverflüssigen oder abzufackeln. Nachteilig ist dabei ein hoher apparativer Aufwand am Fahrzeug und insbesondere der Verlust an Kraftstoff sowie die Freisetzung von Methan, welches gegenüber CO₂ ein wesentlich erhöhtes GWP ("Global Warming Potential") aufweist.

Die Druckschrift DE 10 2006 025 656 B4 offenbart ein Verfahren zum Befüllen und Entleeren eines Kryotanks, der eine Befüll- und Entnahmeeinrichtung mit drei Zugängen zum Innenbehälter aufweist. Diese drei Leitungen sind vom Innenbehälter, durch dessen Ausnehmung, die sich im Wesentlichen innerhalb der Umfangskontur des Innenbehälters befindet und in der auch noch die Wärmesenke untergebracht ist, aus dem Außenbehälter heraus, in den Armaturenbehälter geführt, wobei eine erste Leitung der Entnahme von kryogenem Medium vorwiegend in flüssiger Form aus dem unteren Bereich des Kryotanks dient. Eine zweite Leitung dient der Entnahme von kryogenem Medium vorwiegend in gasförmiger Form aus dem oberen Bereich des Kryotanks und eine dritte Leitung, deren Leitungsende im Kryotank mit einem Diffusor versehen ist, dient zur Rückführung des Mediums als Warmgas in den oberen Bereich des Kryotanks und während der Befüllung des Kryotanks als Befüllleitung. Es werden zudem Betriebsmodi Gasentnahme und Flüssigentnahme mit Druckbereitstellung durch eine Förderpumpe erläutert. Zusammengefasst beschreibt die Druckschrift als Ausgangspunkt der Erfindung ein Fahrzeug mit Entnahmemöglichkeiten für gasförmigen und flüssigen Kraftstoff.

Die Druckschrift JP 2016 133 194 A offenbart einen Gastank für ein Fahrzeug, welches mit Entnahmemöglichkeiten für gasförmigen und flüssigen Kraftstoff ausgerüstet ist. Sowohl die flüssige als auch die gasförmige Phase werden der Brennkraftmaschine zugeführt.

Die Druckschriften JP 2011 089 596 und JP 2010 144 878 A beschreiben ebenfalls einen Gastank für ein Fahrzeug mit Entnahmemöglichkeiten für gasförmigen und flüssigen Kraftstoff aus dem die flüssige als auch die gasförmige Phase der Brennkraftmaschine zugeführt werden.

Schließlich lehrt die Druckschrift DE 10 2014 019 029 A1 noch einen Gastank für ein Fahrzeug, welches auch mit einer Entnahmemöglichkeit für gasförmigen Kraftstoff ausgerüstet ist. Die gasförmige Phase wird in Abhängigkeit von erfassten Parameterwerten einem Verbrennungsmotor zugeführt und verbrannt.

Zum Stand der Technik gehören ferner die Druckschriften US 2015/120166 A1, US 2011/314839 A1, US 2016/017 835 A1, US 2012/060 935 A1, US 2011/257 869 A1, DE 10 2008 030 564 A1 und DE 10 2005 016 006 A1.

Der Erfindung liegt die Aufgabe zugrunde, ein Verfahren und ein Kraftstoffversorgungssystem zu schaffen, welches variablere Entnahmemöglichkeiten für den gasförmigen Kraftstoff im Gaspolster einer mit verflüssigtem, insbesondere tiefkaltem Gas betriebenen Energieumwandlungsvorrichtung schafft.

Als Energieumwandlungsvorrichtung wird eine Brennkraftmaschine oder eine Brennstoffzelle angesehen wird, wobei letztere nach entsprechender Erzeugung von Wasserstoff aus dem gasförmigem Kraftstoff aus dem Gaspolster betrieben werden kann.

Ein Aspekt der Erfindung besteht in der Ausgestaltung eines Verfahrens zum Betrieb einer Energieumwandlungsvorrichtung, insbesondere einer Brennkraftmaschine oder einer Brennstoffzelle, bei der die Kraftstoffentnahme von gasförmigem Kraftstoff aus dem Gaspolster - wann immer möglich - vorrangig der Entnahme von flüssigem Kraftstoff des verflüssigtes Gases vorgesehen ist, wobei mit anderen Worten nachrangig die Entnahme von flüssigem Kraftstoff zum Betrieb der Energieumwandlungsvorrichtung genutzt wird, wie in der Beschreibung näher erläutert ist.

Es versteht sich, dass der flüssig aus dem Kraftstoffbehälter entnommene Kraftstoff anschließend als flüssiger Kraftstoff oder als gasförmiger Kraftstoff der Energieumwandlungsvorrichtung zugeführt werden kann.

Das heißt, die Energieumwandlungsvorrichtung benötigt zum Betrieb mit flüssigem und gasförmigem Kraftstoff Entnahmemöglichkeiten für gasförmigen Kraftstoff aus dem Gaspolster und für den flüssigen Kraftstoff.

Diese getrennten Entnahmemöglichkeiten müssen es ermöglichen, dass der Kraftstoff in unterschiedlichen Aggregatzuständen unabhängig voneinander aus einem Kraftstoffbehälter entnommen werden kann.

Vorgesehen ist, dass eine unabhängige Entnahme von gasförmigem Kraftstoff aus dem Gaspolster und flüssigem Kraftstoff aus dem Kraftstoffbehälter erfolgt, wobei solange ein Betrieb der Energiewandlungsvorrichtung alleine mit dem gasförmigen Kraftstoff aus dem Gaspolster erfolgt, bis ein vorgebbares Kriterium vorliegt, welches eine Umschaltung auf die Entnahme von flüssigem Kraftstoff erfordert.

Das Kraftstoffversorgungssystem umfasst somit eine Umschaltmöglichkeit, um von gasförmigem Kraftstoff aus dem Gaspolster auf flüssigen Kraftstoff umzuschalten und umgekehrt.

Ein Kriterium besteht beispielsweise darin, dass der Druck der gasförmigen Phase im Kraftstoffbehälter unter dem für den angeforderten Lastpunkt benötigten Druck fällt, wonach vorgesehen ist, dass das Fahrzeug entweder durch eine Umschaltung auf den Betrieb mit flüssigem Kraftstoff allein betrieben wird oder bei eingeschränkter Leistung weiterhin nur mit gasförmigem Kraftstoff betrieben wird. Zudem ist die Verwendung von flüssigem und gasförmigem Kraftstoff in einem Mischbetrieb zugleich möglich, wie in der Beschreibung näher erläutert ist.

Erfindungsgemäß ist vorgesehen, dass dem Nutzer diese Wahlmöglichkeit zur Verfügung gestellt wird, wobei vorgesehen ist, dass der Nutzer vorab generell auswählt oder ein Systemoperator dem Nutzer bei Eintreten des jeweiligen Kriteriums jedes Mal die Wahlmöglichkeiten erneut zur Entscheidung vorlegt.

Der Betrieb des Fahrzeugs erfolgt somit, wann immer möglich, nicht durch die Entnahme von flüssigem Kraftstoff, sondern durch die Entnahme von gasförmigem Kraftstoff aus dem Gaspolster.

Hierdurch wird in vorteilhafter Weise erreicht, dass das Gaspolster immer mit minimal möglichem Druck gefahren wird. Die Dampfdruckkurve gibt dabei die Temperatur der flüssigen Phase vor.

Durch motorische Maßnahmen oder ein geschicktes Lastmanagement kann der Druck der Gasphase, das heißt des Gaspolsters, möglichst niedrig und damit die Temperatur der flüssigen Phase ebenfalls möglichst niedrig gehalten werden.

Durch eine Absenkung des Drucks in der gasförmigen Phase, das heißt des Gaspolsters, durch Entnahme von gasförmigem Kraftstoff wird der Sättigungsdampfdruck unterschritten und eine Verdampfung von flüssigem Kraftstoff setzt ein.

Da der Kraftstoffbehälter gegenüber der Umgebung isoliert ist und daher als quasi adiabat betrachtet werden muss, kann durch die Entnahme von Kraftstoff in gasförmiger Phase die Temperatur der flüssigen Phase des Kraftstoffs gesenkt und der Druck des Gaspolsters der Gasphase niedrig gehalten wird. Quasi adiabat bedeutet, dass der Wärmeeintrag in den Kraftstoffbehälter gegenüber der für die Verdampfung nötigen Enthalpie hinreichend klein ist.

Die Verdampfungsenthalphie von Erdgas ist gegenüber der Wärmekapazität groß. In Abhängigkeit des Füllstands des Kraftstoffbehälters und des vorliegenden Drucks kann unter Zuhilfenahme dieser Parameter diejenige zu verbrennende Menge aus der Gasphase ermittelt werden, die nötig ist, um die flüssige Phase - unter Berücksichtigung der Lastanforderungen und des niedrigsten möglichen Einspritzdrucks - auf die tiefste mögliche Temperatur herabzukühlen.

Vorgesehen ist ein Fahrzeug mit einem Verfahren zum Betrieb eines Kraftstoffversorgungssystems, welches erfindungsgemäß aus selbstermittelten oder vorgegebenen Fahrprofilen oder der aktuellen Routenplanung sowie der Verbrauchshistorie und dem aus der Routenplanung ermittelten Verbrauch und der aktuellen Verkehrssituation und der aktuellen Witterung und deren Vorhersage denjenigen Zeitpunkt bestimmten, ab dem die gasförmige Phase genutzt werden soll.

Erfindungsgemäß ist ferner vorgesehen, dass die Nutzung der gasförmigen Phase für den Betrieb der Energieumwandlungsvorrichtung auch willentlich, insbesondere manuell oder telemetrisch, ausgelöst werden kann.

Ist keine maximale Abkühlung möglich, so ist das Kraftstoffversorgungssystem derart eingerichtet, dass dem Nutzer die zu erwartende Temperatur und/oder der korrespondierende Druck und/oder der Zeitpunkt des voraussichtlichen Abblasens mitgeteilt wird.

Dieser Vorgang des Abblasens von gasförmigem Kraftstoff kann automatisch oder manuell oder telemetrisch ausgelöst werden.

Das Kraftstoffversorgungssystem des Fahrzeuges ist derart eingerichtet, dass es vorgibt, ob ein automatischer Betrieb oder ein manueller Betrieb oder ein telemetrischer Betrieb genutzt werden soll.

Im Falle des manuellen Betriebs ist das System derart eingerichtet, dass dem Nutzer die voraussichtlichen Folgen eines Nichtauslösens mitgeteilt werden sowie eine Empfehlung für den Zeitpunkt der Auslösung zum Betrieb mit gasförmigem Kraftstoff aus dem Gaspolster mitgeteilt wird.

Es ist bekannt, dass niedrigere Drücke eine längere Haltezeit bis zum Abblasen erlauben. Die öffentlich bekannten Lösungen lassen einen Boil-off, das heißt einen bestimmten Anstieg des Drucks im Kraftstoffbehälter, zu. Das heißt, der Kraftstoffbehälter muss als Druckbehälter entsprechend ausgelegt werden, wobei höhere Drücke nachteilig im Bezug auf höhere Materialanforderungen zur Gewährleistung der Sicherheit des Druckbehälters sind. Dadurch kann zwar eine unnötige Freisetzung von Methan und damit Umweltschäden und Reichweitenverluste vermieden werden, jedoch hat diese Vorgehensweise keine Wirkungen auf den eigentlichen Fahrzeugbetrieb im Gegensatz zu der erfindungsgemäß vorgeschlagenen Vorgehensweise.

Ausgangspunkt der Erfindung hinsichtlich der Struktur des Kraftstoffversorgungssystems ist ein Kraftstoffbehälter zur Speicherung eines verflüssigten gasförmigen Kraftstoffs, der im Kraftstoffbehälter in einer Flüssigphase und in einer Gasphase vorliegt, und im Kraftstoffbehälter ein Gaspolster bildet, wobei der Kraftstoffbehälter Entnahmearmaturen zur getrennten Entnahme der Flüssigphase und der Gasphase und eine Kraftstoffzuführungsanlage (zu einer Energieumwandlungsvorrichtung) aufweist, wobei die Kraftstoffzuführungsanlage den Kraftstoff aus dem Kraftstoffbehälter einer Energieumwandlungsvorrichtung des Fahrzeuges zumisst, wobei die Entnahmearmaturen und die Kraftstoffzuführungsanlage mit einer Steuereinrichtung in direkter oder indirekter Verbindung stehen, wobei die Steuereinrichtung derart eingerichtet ist, dass der Kraftstoffzuführungsanlage in Abhängigkeit eines voraussichtlichen Zeitpunktes eines Betankungsvorgangs vorrangig Kraftstoff aus dem Gaspolster in der Gasphase und erst nachrangig Kraftstoff in der Flüssigphase zugeführt wird.

Bevorzugt ist vorgesehen, dass die Steuereinrichtung ein erstes Steuergerät umfasst, welches eine Temperatur der Gasphase in dem Kraftstoffbehälter mittels eines Temperatur-Sensors bestimmt.

Ferner ist vorgesehen, dass die Steuereinrichtung ein erstes Steuergerät umfasst, dem eine erfasste Temperatur der Gasphase in dem Kraftstoffbehälter mittels eines Temperatur-Sensors und ein erfasster Füllstand der Flüssigphase in dem Kraftstoffbehälter mittels eines Füllstands-Sensors und ein erfasster Druck der Gasphase in dem Kraftstoffbehälter mittels eines Druck-Sensors zugeführt wird, wobei im ersten Steuergerät ferner diejenige Kraftstoffmenge der Gasphase aus dem Gaspolster bestimmt wird, die aus dem Gaspolster entnommen werden muss, um in dem Gaspolster einen am Druck-Sensor messbaren vorgebbaren Druck, vorzugsweise einen minimalen Druck, zu gewährleisten.

Die Steuereinrichtung umfasst bevorzugt ein zweites Steuergerät, welches steuerungsseitig mit den Entnahmearmaturen und der Kraftstoffzuführungsanlage in Verbindung steht und das derart eingerichtet ist, die Entnahme der Gasphase aus dem Gaspolster und der Flüssigphase zu steuern, wobei das zweite Steuergerät steuerungsseitig mit dem ersten Steuergerät in Verbindung steht.

Zudem umfasst die Steuereinrichtung bevorzugt ein drittes Steuergerät, welches steuerungsseitig mit einer Energieumwandlungsvorrichtung und dem ersten Steuergerät verbunden ist, wobei in dem dritten Steuergerät lastpunktanhängig der aktuelle Bedarf der Energieumwandlungsvorrichtung an Kraftstoff ermittelt und dem ersten Steuergerät mitgeteilt wird.

Es versteht sich, dass die Funktionen der drei Steuergeräte in Steuerbausteinen grundsätzlich in einem Steuergerät zusammengefasst werden können.

Erfindungsgemäß ist vorgesehen, dass die Steuereinrichtung ein Navigationssystem umfasst, welches steuerungsseitig mit dem ersten Steuergerät und mit Anzeigen in Verbindung steht, wobei eine erste Anzeige die Entfernung bis zur nächsten Tankstelle des mit dem Kraftstoffversorgungssystem ausgestatteten Fahrzeuges und eine zweite Anzeige die Reichweite des mit dem Kraftstoffversorgungssystem ausgestatteten Fahrzeuges anzeigt.

Dabei erfolgen die Anzeigen bevorzugt wahlweise unter Berücksichtigung des Betriebes der Energieumwandlungsvorrichtung mit der Gasphase und der Flüssigphase und/oder unter Berücksichtigung des Betriebes der Energieumwandlungsvorrichtung mit der Gasphase allein und/oder unter Berücksichtigung des Betriebes der Energieumwandlungsvorrichtung unter Berücksichtigung der Flüssigphase allein.

Erfindungsgemäß umfasst die Steuereinrichtung zudem eine computergestützte Benutzerschnittstelle oder Benutzeroberfläche, welche mittels eines vierten Steuergerätes gesteuert wird, wobei das vierte Steuergerät steuerungsseitig mit dem ersten Steuergerät in Verbindung steht, wobei von einem Benutzer über die Benutzeroberfläche der Benutzerschnittstelle wahlweise eine "automatische" oder eine "manuelle" oder eine "telemetrische" Betriebsweise auswählbar ist, wobei bei einer automatischen Betriebsweise eine automatische Vorrang-Nutzung des Kraftstoffes der Gasphase aus dem Gaspolster oder bei einer manuellen Betriebsweise eine manuelle Vorrang-Nutzung des Kraftstoffes der Gasphase aus dem Gaspolster oder bei einer telemetrischen Betriebsweise eine telemetrische Vorrang-Nutzung des Kraftstoffes der Gasphase aus dem Gaspolster stattfindet.

Mit anderen Worten der Vorgang kann erfindungsgemäß in einer automatischen Betriebsweise oder einer manuellen Betriebsweise oder in einer telemetrischen Betriebsweise ausgelöst werden.

Bei einer automatischen Auslösung in der automatischen Betriebsweise kann die Steuereinrichtung, insbesondere das erste Steuergerät beziehungsweise der erste Steuerbaustein in Kombination mit dem Navigationsgerät aus der Entfernung zur nächsten Tankstelle, dem Kraftstoffinhalt im Kraftstoffbehälter der flüssigen und insbesondere gasförmigen Phase sowie des aktuellen Durchschnittsverbrauchs diesen Vorgang, dass vorrangig Kraftstoff in der Gasphase aus dem Gaspolster zugeführt wird, "automatisch" (von sich aus über die Steuereinrichtung) auslösen.

Ein Tankverhalten des Nutzers beispielsweise tankt sehr früh, früh oder spät oder sehr spät oder der aktuellen Witterung und deren Vorhersage oder Vorgabe kann ebenfalls in die Auslösestrategie einbezogen werden.

Weiterhin kann dem Nutzer als Option - um mehr Kontrolle zu erhalten - die Auslösung dieses Vorgangs, dass vorrangig Kraftstoff in der Gasphase aus dem Gaspolster zugeführt wird, angezeigt werden oder er zusätzlich um Bestätigung zur Ausführung des Vorgangs gebeten werden.

Bei einer manuellen Auslösung kann der Nutzer mittels der Benutzerschnittstelle, zum Beispiel den Vorgang, dass vorrangig Kraftstoff in der Gasphase K_{gas} aus dem Gaspolster zugeführt wird, "manuell" auslösen.

Zur Entscheidungshilfe kann dem Nutzer durch die Steuereinrichtung des Fahrzeuges die ermittelte Restreichweite bis zur nächsten Tankstelle mit gasförmigem Kraftstoff aus dem Gaspolster gegebenenfalls unter Zuhilfenahme des Fahrprofils, der Routenplanung mit Höhenprofil, der Verkehrssituation sowie Verkehrsanlagen sowie der Witterung usw. angezeigt werden.

Zudem kann innerhalb der manuellen Betriebsweise der Nutzer beim oder kurz vor dem Erreichen des aktuell oder prognostizierten Drucks innerhalb des Gaspolsters für den passenden Lastpunkt gefragt wird, ob er mit reduzierter Leistung weiterfahren will oder wechseln will.

Bei einer telemetrischen Auslösung kann/können der Nutzer und/oder ein örtlich getrennter Operateur durch eine Benutzerschnittstelle den Vorgang, dass vorrangig Kraftstoff in der Gasphase aus dem Gaspolster zugeführt wird, telemetrisch fernauslösen.

Bei der telemetrischen Betriebsweise kann der Operator eine manuelle Betriebsweise für den Nutzer vorgeben oder eine automatische Betriebsweise für den Nutzer vorgeben, oder sogar selbst manuell oder automatisch für den Nutzer entscheiden.

Bei einer Vorgabe der Betriebsweise durch den Operator kann es zudem vorgegeben sein, dass der Nutzer a) diese Vorgabe ohne Rückfrage überschreiben kann, oder b) diese Vorgabe erst nach Rückfrage überschreiben kann, oder c) diese Vorgabe nur nach Eingabe eines Kennwortes überschreiben kann oder d) nicht überschreiben kann.

Zur Entscheidungshilfe übermittelt die Steuereinrichtung des Fahrzeuges die ermittelte Restreichweite mit gasförmigem Kraftstoff, gegebenenfalls unter Zuhilfenahme des Fahrprofils, der Routenplanung mit Höhenprofil, der Verkehrssituation sowie Verkehrsanlagen sowie der Witterung, dem Nutzer und zeigt die ihm an oder die hierfür benötigten Daten werden telemetrisch an den Operateur fernübermittelt und angezeigt, sodass der Nutzer und/oder der örtlich getrennte Operateur diese Restreichweite ermitteln kann.

Das erfindungsgemäße Verfahren zur Kraftstoffversorgung einer Energieumwandlungsvorrichtung mit einem in einem Kraftstoffbehälter gespeicherten verflüssigten gasförmigen Kraftstoff, der im Kraftstoffbehälter in einer Flüssigphase und in einer Gasphase vorliegt und im Kraftstoffbehälter ein Gaspolster bildet, wobei der Kraftstoffbehälter Entnahmearmaturen zur getrennten Entnahme der Flüssigphase und der Gasphase und eine Kraftstoffzuführungsanlage aufweist, zeichnet sich dadurch aus, dass die Entnahmearmaturen und die Kraftstoffzuführungsanlage mit einer Steuereinrichtung in direkter oder indirekter Verbindung stehen, die derart eingerichtet ist, dass der Kraftstoffzuführungsanlage in Abhängigkeit eines voraussichtlichen Zeitpunktes eines Betankungsvorgangs vorrangig Kraftstoff in der Gasphase aus dem Gaspolster und erst nachrangig Kraftstoff in der Flüssigphase zugeführt wird.

Wesentliche Aspekte bestehen erfindungsgemäß darin, dass eine "automatische" oder eine "manuelle" oder eine "telemetrische" Betriebsweise ausgewählt wird, wobei bei einer gewählten automatischen Betriebsweise automatisch eine vorrangige Nutzung des Kraftstoffes der Gasphase aus dem Gaspolster oder bei einer manuellen Betriebsweise eine manuelle vorrangige Nutzung des Kraftstoffes der Gasphase aus dem Gaspolster oder bei einer telemetrischen Betriebsweise telemetrisch eine vorrangige Nutzung des Kraftstoffes der Gasphase aus dem Gaspolster ausgelöst wird.

Zudem zeichnet sich das Verfahren erfindungsgemäß dadurch aus, dass der Kraftstoffzuführungsanlage der Energieumwandlungsvorrichtung mittels der Entnahmearmaturen zur getrennten Entnahme der Flüssigphase und der Gasphase aus dem Kraftstoffbehälter in einem Wechselbetrieb oder in einem Mischbetrieb Kraftstoff in der Gasphase und/oder der Flüssigphase zugeführt wird.

In einer anderen, nicht beanspruchten Ausgestaltung ist Folgendes vorgesehen:
Ausgangspunkt der anderen Ausgestaltung ist wiederum ein Fahrzeug mit einem Kraftstoffversorgungssystem umfassend einen Kraftstoffbehälter zur Speicherung eines verflüssigten gasförmigen Kraftstoffs, der im Kraftstoffbehälter in einer Flüssigphase und in einer Gasphase vorliegt und im Kraftstoffbehälter ein Gaspolster bildet, wobei der Kraftstoffbehälter Entnahmearmaturen zur getrennten Entnahme der Flüssigphase und der Gasphase und eine Zuführungsarmatur zur Zuführung des verflüssigten gasförmigen Kraftstoffs in den Kraftstoffbehälter sowie eine Kraftstoffzuführungsanlage aufweist, wobei die Kraftstoffzuführungsanlage den Kraftstoff aus dem Kraftstoffbehälter einer Energieumwandlungsvorrichtung des Fahrzeuges zumisst, wobei die Entnahmearmaturen und die Kraftstoffzuführungsanlage mit einer Steuereinrichtung in direkter oder indirekter Verbindung stehen.

Es ist jetzt vorgesehen, dass die Steuereinrichtung derart eingerichtet ist, dass der Druck des Gaspolsters der Gasphase bis zu einem voraussichtlichen Zeitpunkt eines Betankungsvorgangs auf einen vorgebbaren Druck, vorzugsweise einen minimalen Druck reduziert ist, indem der Energieumwandlungsvorrichtung über die Kraftstoffzuführungsanlage in Abhängigkeit des voraussichtlichen Zeitpunktes eines Betankungsvorgangs vorrangig Kraftstoff in der Gasphase aus dem Gaspolster und erst nachrangig Kraftstoff in der Flüssigphase zugeführt wird.

Bevorzugt ist wiederum vorgesehen, dass die Steuereinrichtung auch bei dieser Ausgestaltung ein Navigationssystem umfasst, welches steuerungsseitig mit einem ersten Steuergerät oder einem ersten Steuerbaustein und mit Anzeigen in Verbindung steht, wobei ein erstes Anzeigeelement in dieser Ausgestaltung die Entfernung bis zur nächsten Tankstelle des mit dem Kraftstoffversorgungssystem ausgestatteten Fahrzeuges und ein zweites Anzeigeelement die (Rest-)Reichweite des mit dem Kraftstoffversorgungssystem ausgestatteten Fahrzeuges wahlweise
- unter Berücksichtigung des Betriebes der Energieumwandlungsvorrichtung mit der Gasphase und der Flüssigphase und/oder
- unter Berücksichtigung des Betriebes der Energieumwandlungsvorrichtung mit der Gasphase allein und/oder
- unter Berücksichtigung des Betriebes der Energieumwandlungsvorrichtung unter Berücksichtigung der Flüssigphase allein
angezeigt, die in dem ersten Steuergerät oder einem ersten Steuerbaustein unter Berücksichtigung der Entfernung zur nächsten Tankstelle, die über das Navigationsgerät bereitgestellt wird, berechnet.

Bevorzugt ist vorgesehen, dass das Navigationssystem steuerungsseitig mit dem ersten Steuergerät oder dem ersten Steuerbaustein in Verbindung steht, wobei in dem ersten Steuergerät oder dem ersten Steuerbaustein die Reichweite bis zur nächsten Tankstelle berechnet wird, und der Vorrang der Kraftstoffzuführung der Gasphase des Kraftstoffs aus dem Gaspolster in einer automatischen Betriebsweise des Fahrzeuges ausgelöst oder in einer manuellen Betriebsweise durch den Nutzer ausgelöst oder in einer telemetrischen Betriebsweise durch einen Operateur fernausgelöst wird.

Ferner ist bevorzugt vorgesehen, dass das Fahrzeug in dem ersten Steuergerät oder dem ersten Steuerbaustein ein Betankungsverhalten registriert und bei der vorrangigen Kraftstoffzuführung der Gasphase des Kraftstoffs aus dem Gaspolster zu der Kraftstoffzuführungsanlage berücksichtigt wird.

Es ist vorgesehen, dass dem ersten Steuergerät oder dem ersten Steuerbaustein der Steuereinrichtung
- eine erfasste Temperatur der Gasphase in dem Kraftstoffbehälter mittels einem Temperatur-Sensor und
- ein erfasster Füllstand der Flüssigphase in dem Kraftstoffbehälter mittels einem Füllstands-Sensor und/oder ein erfasster Druck der Flüssigkeit in dem Kraftstoffbehälter mittels eines Drucksensors
- ein erfasster Druck der Gasphase in dem Kraftstoffbehälter mittels einem Druck-Sensor zugeführt wird, wobei im ersten Steuergerät oder dem ersten Steuerbaustein ferner diejenige Kraftstoffmenge der Gasphase aus dem Gaspolster bestimmt wird, die bis zum voraussichtlichen Zeitpunkt des nächsten Betankungsvorgangs aus dem Gaspolster entnommen werden muss, um in dem Gaspolster den an dem Druck-Sensor messbaren vorgebbaren Druck, vorzugsweise einen minimalen Druck zu gewährleisten.

Das Kraftstoffversorgungssystem des Fahrzeuges zeichnet sich ferner dadurch aus, dass die Steuereinrichtung ein zweites Steuergerät oder einen zweiten Steuerbaustein umfasst, welches/welcher steuerungsseitig mit den Entnahmearmaturen und der Kraftstoffzuführungsanlage in Verbindung steht, und das/der derart eingerichtet ist, die Entnahme der Gasphase aus dem Gaspolster und der Flüssigphase zu steuern, wobei das zweite Steuergerät oder der zweite Steuerbaustein steuerungsseitig mit dem ersten Steuergerät oder dem ersten Steuerbaustein in Verbindung steht.

Vorgesehen ist bevorzugt, dass die Steuereinrichtung ein drittes Steuergerät oder einen dritten Steuerbaustein umfasst, welches/welcher steuerungsseitig mit einer

Energieumwandlungsvorrichtung und dem ersten Steuergerät oder dem ersten Steuerbaustein verbunden ist, wobei in dem dritten Steuergerät oder dem dritten Steuerbaustein lastpunktanhängig der aktuelle Bedarf der Energieumwandlungsvorrichtung an Kraftstoff ermittelt und dem ersten Steuergerät oder dem ersten Steuerbaustein mitgeteilt wird. Schließlich umfasst das Kraftstoffversorgungssystem des Fahrzeuges in bevorzugter

Ausgestaltung eine computergestützte Benutzerschnittstelle oder Benutzeroberfläche, welche mittels eines vierten Steuergerätes oder eines vierten Steuerbausteines gesteuert wird, wobei das vierte Steuergerät steuerungsseitig mit dem ersten Steuergerät oder dem ersten Steuerbaustein in Verbindung steht, wobei von einem Benutzer über die Benutzeroberfläche der Benutzerschnittstelle wahlweise eine "automatische" oder eine "manuelle" oder eine "telemetrische" Betriebsweise auswählbar ist, wobei
- bei einer automatischen Betriebsweise eine automatische vorrangige Nutzung des Kraftstoffes der Gasphase aus dem Gaspolster, oder
- bei einer manuellen Betriebsweise eine manuelle vorrangige Nutzung des Kraftstoffes der Gasphase aus dem Gaspolster, oder
- bei einer telemetrischen Betriebsweise eine telemetrische vorrangige Nutzung des Kraftstoffes der Gasphase aus dem Gaspolster
stattfindet.

Der Kerngedanke des erfindungsgemäßen Verfahrens zur Kraftstoffversorgung einer Energieumwandlungsvorrichtung eines Fahrzeuges besteht darin, dass in einem Kraftstoffbehälter gespeicherter verflüssigter, gasförmiger Kraftstoff, der im Kraftstoffbehälter in einer Flüssigphase und in einer Gasphase vorliegt und im Kraftstoffbehälter ein Gaspolster bildet, bis zu einem voraussichtlichen Zeitpunkt eines Betankungsvorgangs auf einen vorgebbaren Druck, vorzugsweise einen minimalen Druck reduziert wird, indem der Energieumwandlungsvorrichtung über die Kraftstoffzuführungsanlage in Abhängigkeit des voraussichtlichen Zeitpunktes des Betankungsvorgangs vorrangig Kraftstoff in der Gasphase aus dem Gaspolster und erst nachrangig Kraftstoff in der Flüssigphase zugeführt wird.

Das Verfahren zeichnet sich weiter bevorzugt dadurch aus, dass eine Reichweite des mit dem Kraftstoffversorgungssystem ausgestatteten Fahrzeuges wahlweise
- unter Berücksichtigung des Betriebes der Energieumwandlungsvorrichtung mit der Gasphase und der Flüssigphase und/oder
- unter Berücksichtigung des Betriebes der Energieumwandlungsvorrichtung mit der Gasphase allein und/oder
- unter Berücksichtigung des Betriebes der Energieumwandlungsvorrichtung unter Berücksichtigung der Flüssigphase allein
angezeigt wird, die unter Berücksichtigung der Entfernung zur nächsten Tankstelle berechnet wird.

Es wird ferner vorgeschlagen, dass die Reichweite bis zur nächsten Tankstelle berechnet wird, und der Vorrang der Kraftstoffzuführung der Gasphase des Kraftstoffs aus dem Gaspolster in einer automatischen Betriebsweise des Fahrzeuges ausgelöst oder in einer manuellen Betriebsweise durch den Nutzer ausgelöst oder in einer telemetrischen Betriebsweise durch einen Operateur fernausgelöst wird; "automatisch" oder "manuell" oder "telemetrisch", wie in der Beschreibung noch näher erläutert ist.

Gemäß einer bevorzugten Ausgestaltung des Verfahren ist vorgesehen, dass ein Betankungsverhalten eines Nutzers oder verschiedener Nutzer registriert und bei der vorrangigen Kraftstoffzuführung der Gasphase des Kraftstoffs aus dem Gaspolster zu der Kraftstoffzuführungsanlage berücksichtigt wird.

Das Verfahren zeichnet sich auch bei die Ausgestaltung dadurch aus, dass der Kraftstoffzuführungsanlage der Energieumwandlungsvorrichtung mittels der Entnahmearmaturen zur getrennten Entnahme der Flüssigphase und der Gasphase aus dem Kraftstoffbehälter
- in einem Wechselbetrieb oder
- in einem Mischbetrieb

Kraftstoff in der Gasphase und/oder der Flüssigphase zugeführt wird.

Die verschiedenen in dieser Anmeldung genannten Ausführungsformen und Ausgestaltungen der Erfindung sind, sofern im Einzelfall nicht anders ausgeführt und ohne vom Gegenstand der unabhängigen Ansprüche abzuweichen, mit Vorteil miteinander kombinierbar.

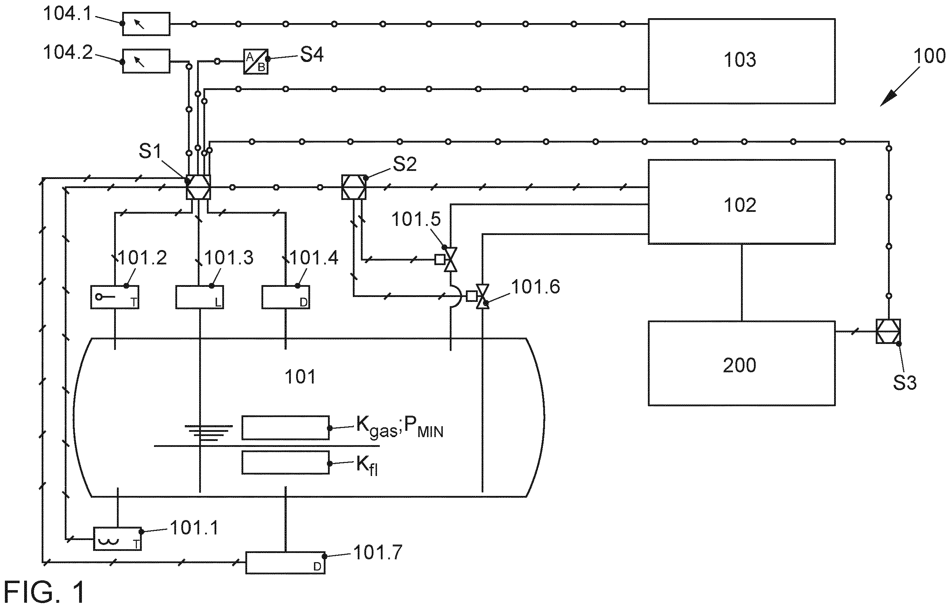

Die Erfindung wird nachfolgend in Ausführungsbeispielen anhand der zugehörigen einzigen Figur 1, die ein erfindungsgemäßes Kraftstoffversorgungssystem zeigt, näher erläutert.

Das Kraftstoffversorgungssystem ist gemäß Figur 1 insgesamt mit dem Bezugszeichen 100 versehen, wobei die Energieumwandlungsvorrichtung mit dem Bezugszeichen 200 gekennzeichnet ist.

Das Kraftstoffversorgungssystem 100 umfasst den Kraftstoffbehälter 101, in dem der verflüssigte gasförmige Kraftstoff K_{fl} und das darüber liegende Gaspolster, mithin der Kraftstoff in der gasförmigen Phase K_{gas}, vorliegen.

Das erfindungsgemäße Kraftstoffversorgungssystem 100 ist mit nur einem Temperatur-Sensor 101.1 ausgestattet, der vorzugsweise am Boden des Kraftstoffbehälters 101 angeordnet ist, der die Temperatur des verflüssigten Kraftstoffs K_{fl} im Kraftstoffbehälter 101 misst.

Alternativ kann der Temperatur-Sensor 101.1 entfallen, indem die Ermittlung der Temperatur der flüssigen Kraftstoffphase K_{fl} (kurz: Flüssigphase) näherungsweise nur durch Kenntnis des Druckes der gasförmigen Kraftstoffhase K_{gas} (kurz: Gasphase) erfolgt.

Dem Kraftstoffbehälter 101 ist ein Temperatur-Sensor 101.2 zur Messung der Temperatur der Gasphase zugeordnet.

Alternativ kann der Temperatur-Sensor 101.2 zur Messung der Temperatur der Gasphase entfallen, wenn ein Druck-Sensor 101.4 zur Messung des Drucks der Gasphase vorhanden ist. Dem Kraftstoffbehälter 101 ist ein Füllstands-Sensor 101.3 zur Messung des Füllstandes der Flüssigphase im Kraftstoffbehälter 101 und/oder ein Druck-Sensor 101.7 zur Messung des Druckes und Ermittlung des Füllstandes der Flüssigphase im Kraftstoffbehälter 101 zugeordnet.

Mindestens einer der Sensoren 101.3 und/oder 101.7 wird benötigt um den Füllstand der flüssigen Kraftstoffphase K_{fl} im Kraftstoffbehälter 101 zu ermitteln.

Dem Kraftstoffbehälter 101 ist ferner ein Druck-Sensor 101.4 zur Messung des Druckes der Gasphase im Kraftstoffbehälter 101 zugeordnet.

Prinzipiell wird in einer Ausführungsvariante nur der Temperatur-Sensor 101.2 am Boden des Kraftstoffbehälters 101 und der Druck-Sensor 101.4 in der Gasphase sowie die Füllstandsmessung, das heißt der Füllstands-Sensor 101.3 der Flüssigphase im Kraftstoffbehälter 101 benötigt.

Wenn der Druck am Behälterboden mithilfe des Druck-Sensors 101.7 der Flüssigphase erfasst wird, so kann in einer anderen Ausführungsvariante auf die Füllstandsmessung mittels eines Füllstands-Sensor 101.3 der Flüssigphase verzichtet werden.

Wird in weiteren Ausführungsvarianten jeweils ein geeignetes Modell hinterlegt, reicht
a) ein Druck-Sensor 101.4 für die Gasphase und eine Füllstandsmessung der Flüssigphase mittels des Füllstands-Sensors 101.3 im Kraftstoffbehälter 101 oder
b) ein Temperatur-Sensor 101.2 in der Gasphase und die Füllstandsmessung der Flüssigphase mittels des Füllstands-Sensors 101.3 oder
c) ein Drucksensor 101.4 für die Gasphase und ein Druck-Sensor 101.7 für die Flüssigphase oder
d) ein Druck-Sensor 101.4 für die Gasphase und ein Temperatur-Sensor 101.1 für die Flüssigphase
aus, um die benötigten Werte zu ermitteln.

Bei Fehlen der Füllstandsmessungen gemäß c) und d) wird über den Verbrauch an Kraftstoff über die Einspritzmengen ermittelt, sodass schließlich der Füllstand im Kraftstoffbehälter 101 zumindest näherungsweise vorliegt.

Zudem kann der Kraftstoffbehälter 101 eine Vorrichtung (nicht dargestellt) zur Bestimmung der Neigung des Kraftstoffbehälters 101 aufweisen, deren ermittelte Werte mit in die Füllstandsberechnung des Kraftstoffbehälters 101 mit einbezogen werden können, um bei geneigten Fahrzeugpositionen eine fehlerreduzierte Füllstandsbestimmung zu gewährleisten.

Dem Kraftstoffbehälter 101 sind zudem Entnahmearmaturen zugeordnet, wobei eine Entnahmearmatur 101.5 zur Entnahme der Gasphase und eine Entnahmearmatur 101.6 zur Entnahme der Flüssigphase angeordnet sind.

Die Erfassung der vorgenannten Messwerte sowie die Auswertung der ermittelten Daten sowie die Steuerung der Entnahmearmaturen 101.5. und 101.6 des Kraftstoffversorgungssystems 100 zur Versorgung der Kraftstoffzuführungsanlage 102 kann in einem oder mehreren Steuergeräten erfolgen.

Im Ausführungsbeispiel ist ein Steuergerät S2 den Entnahmearmaturen 101.5. und 101.6 und ein Steuergerät S1 den Sensoren 101.2, 101.3, 101.4 des Kraftstoffbehälters 101 zugeordnet.

Ein drittes Steuergerät S3, welches der Energieumwandlungsvorrichtung 200 zugeordnet ist, ermittelt im Ausführungsbeispiel den Durchschnitts-Kraftstoffverbrauch der Energieumwandlungsvorrichtung 200 und den aktuellen Bedarf an Kraftstoff K_{fl}, K_{gas} getrennt nach Gasphase und Flüssigphase, wobei die Bedarfe lastpunktabhängig (Lastmanagement) ermittelt werden. Das dritte Steuergerät S3 tauscht Daten mit dem ersten Steuergerät S1 aus.

Im ersten Steuergerät S1 erfolgt anhand der vorliegenden Daten über die Gasphase diejenige Kraftstoffmenge, die aus dem Gaspolster entnommen werden muss, um in dem Gaspolster einen bestimmten Druck, vorzugsweise einen minimalen Druck p_{MIN}, zu gewährleisten. Aufgrund des Lastmanagements über das Steuergerät S3 ist es möglich festzustellen, wieviel Kraftstoff in der Gasphase aktuell oder durchschnittlich über die Entnahmearmatur 101.5 entnommen werden kann beziehungsweise der Kraftstoffzuführungsanlage 102 zugeführt werden muss, wobei die Entnahmearmatur 101.5 von dem zweiten Steuergerät S2 entsprechend angesteuert wird, welches mit dem ersten Steuergerät S1 und der Kraftstoffzuführungsanlage 102 im Datenaustausch steht.

Sinkt dann der Druck der gasförmigen Phase, wie bereits erläutert, unter den für einen angeforderten Lastpunkt der Energieumwandlungsvorrichtung 200 benötigten Druck, so kann das Fahrzeug auf einem Wechselbetrieb oder einem Mischbetrieb mit flüssigem und gasförmigem Kraftstoff betrieben werden.

Bei dem Wechselbetrieb ist vorgesehen, dass in einem aktivierten Flüssigphasenbetrieb, sobald wieder ein Betrieb mit der Gasphase allein möglich ist, auf Gasphasenbetrieb zurückgestellt wird, das heißt, die Entnahme der einen oder anderen Phase ist wechselseitig vorgesehen.

Bei einem Mischbetrieb wird in einem ersten Mischbetriebsmodus das Fahrzeug derart ausgerüstet, dass die Flüssigphase und die Gasphase parallel zugleich über die Entnahmearmaturen 101.5. und 101.6 aus dem Kraftstoffbehälter 101 entnommen werden können. Beispielsweise wird bei einem Hubkolbenmotor die Gasphase dem Saugrohr (äußere Gemischbildung) und die Flüssigphase per Direkteinspritzung (innere Gemischbildung) entweder flüssig oder bereits verdampft dem Zylinderbrennraum des Zylinders des Hubkolbenmotors getrennt zugeführt.

Bei einem Mischbetrieb wird in einem zweiten Mischbetriebsmodus (nicht dargestellt) das Fahrzeug derart ausgerüstet, dass die Flüssigphase und die Gasphase parallel zugleich über die Entnahmearmaturen 101.5. und 101.6 aus dem Kraftstoffbehälter 101 entnommen werden können, wobei die zugehörige Entnahmeleitungen miteinander verbunden (nicht dargestellt) sind.

Dabei wird sowohl aus der gasförmigen als auch aus der flüssigen Phase Kraftstoff entnommen. Der Kraftstoff der gasförmigen Phase wird hierzu in die zugehörige Kraftstoffzuführleitung eingebracht. Der Kraftstoff der flüssigen Phase wird über einen Wärmeübertrager (nicht dargestellt) verdampft und später der Kraftstoffzuführleitung, die bereits den gasförmigen Kraftstoff enthält, über eine (Verbindungs)-Zuführleitung (nicht dargestellt) zugeführt, die mit der Kraftstoffzuführleitung der Gasphase in Verbindung steht. Die Verbindungs)-Zuführleitung und die Kraftstoffzuführleitungen der flüssigen und gasförmigen Phasen sind mit den dazu notwendigen Armaturen (nicht dargestellt) ausgestattet, sodass eine Gasmischstrecke ausgebildet ist.

Über die Steuergeräte S1, S2, S3 und die den Steuergeräten S1, S2, S3 zugeordneten Programmen und Applikationen wird/werden der Kraftstoffzuführungsanlage 102 die Flüssigphase K_{fl} und/oder die Gasphase K_{gas} je nach Betriebsart (Wechselbetrieb oder Mischbetrieb in einem der Modi) in der zugewiesenen Menge zugeführt.

Wie bereits oben erläutert, werden dem Nutzer hinsichtlich der Nutzung der gasförmigen Phase K_{gas} für den Betrieb der Energieumwandlungsvorrichtung 200 Wahlmodi "automatisch", "manuell" oder telemetrisch zur Wahl gestellt, die über eine computergestützte Benutzerschnittstelle oder Benutzeroberfläche, welche von einem Steuergerät S4 angesteuert wird, angezeigt und ausgewählt werden können. Das Steuergerät S4 steht mit dem ersten Steuergerät S1 in Verbindung.

Dem ersten Steuergerät S1 ist zudem ein Navigationsgerät 103 aufgeschaltet, welches die Entfernung eines Fahrzeuges, welches mit dem Kraftstoffversorgungssystem 100 und der Energieumwandlungsvorrichtung 200 ausgestattet ist, bis zur nächsten geeigneten Tankstelle angibt. Dadurch kann die Kraftstoffmenge unter Einbeziehung des Verbrauchs, fahrzeugmodellbasiert oder auf einem lernenden Algorithmus mit der Routenplanung des Navigationsgerätes 103 zur Ermittlung der Entfernung bis zur nächsten Tankstelle verbunden werden.

Das Steuergerät S1 gibt im Ausführungsbeispiel auf Anzeigen 104 aufgrund der vorliegenden Daten erfindungsgemäß in einem ersten Anzeigeelement 104.1 die Entfernung bis zur nächsten Tankstelle und in einem zweiten Anzeigeelement 104.2 die Reichweite des Fahrzeuges einmal unter Berücksichtigung der Gasphase F_{gas} und der Flüssigphase F_{fl} und ein anderes Mal nur für die Gasphase F_{gas} und die Flüssigphase F_{fl} einzeln an.

Ein weiterer wesentlicher Aspekt der Erfindung besteht darin, dass der in der gasförmigen Phase F_{gas} im Druckpolster vorliegende befindliche Kraftstoff vor dem Tankvorgang verbraucht wird, indem er der Energiewandlungsmaschine 200 zugeführt wird.

Dabei wird, in Abhängigkeit des Drucks der Gasphase, an allen möglichen Betriebspunkten der Energieumwandlungsvorrichtung 200 der gasförmige Kraftstoff F_{gas} gegenüber dem flüssigen Kraftstoffs F_{fl} bevorzugt.

Durch die Entnahme der Gasphase F_{gas} aus dem Gaspolster wird die flüssige Phase durch den verminderten Druck im Gaspolster zum Verdampfen angeregt und dadurch abgekühlt.

Hierdurch entsteht entsprechend der Dampfdruckkurve ein niedrigerer Druck in der Gasphase.

Dieser Vorgang kann erfindungsgemäß in einer automatischen Betriebsweise oder einer manuellen Betriebsweise oder in einer telemetrischen Betriebsweise ausgelöst werden.

Bei einer automatischen Auslösung in der automatischen Betriebsweise kann die Steuereinrichtung, insbesondere das erste Steuergerät S1 beziehungsweise der erste Steuerbaustein S1, in Kombination mit dem Navigationsgerät 103 aus der Entfernung zur nächsten Tankstelle, dem Kraftstoffinhalt im Kraftstoffbehälter 101 der flüssigen F_{fl}und insbesondere gasförmigen Phase F_{gas} sowie dem aktuellen Durchschnittsverbrauch diesen Vorgang, dass vorrangig Kraftstoff in der Gasphase K_{gas} aus dem Gaspolster zugeführt wird, "automatisch" (von sich aus über die Steuereinrichtung) auslösen.

Ein Tankverhalten des Nutzers, beispielsweise tankt sehr früh, früh oder spät oder sehr spät oder die aktuelle Witterung und deren Vorhersage oder Vorgabe kann ebenfalls in die Auslösestrategie einbezogen werden.

Weiterhin kann dem Nutzer als Option - um mehr Kontrolle zu erhalten - die Auslösung dieses Vorgangs, dass vorrangig Kraftstoff in der Gasphase K_{gas} aus dem Gaspolster zugeführt wird, angezeigt werden oder er zusätzlich um Bestätigung zur Ausführung des Vorgangs gebeten werden.

Bei einer manuellen Auslösung kann der Nutzer mittels der Benutzerschnittstelle S4, zum Beispiel den Vorgang, dass vorrangig Kraftstoff in der Gasphase K_{gas} aus dem Gaspolster zugeführt wird, "manuell" auslösen.

Zur Entscheidungshilfe kann dem Nutzer durch die Steuereinrichtung des Fahrzeuges die ermittelte Restreichweite bis zur nächsten Tankstelle (Bezugszeichen 104.1 in Figur 1) mit gasförmigem Kraftstoff F_{gas} aus dem Gaspolster gegebenenfalls unter Zuhilfenahme des Fahrprofils, der Routenplanung mit Höhenprofil, der Verkehrssituation sowie Verkehrsanlagen sowie der Witterung usw. angezeigt (vergleiche Bezugszeichen 104.1, 104.2 der Anzeigen 104 in Figur 1) werden.

Bei einer telemetrischen Auslösung kann/können der Nutzer und/oder ein örtlich getrennter Operateur durch eine Benutzerschnittstelle S4 den Vorgang, dass vorrangig Kraftstoff in der Gasphase K_{gas} aus dem Gaspolster zugeführt wird, telemetrisch fernauslösen. Bei der telemetrischen Betriebsweise kann der Operator eine manuelle Betriebsweise für den Nutzer vorgeben oder eine automatische Betriebsweise für den Nutzer vorgeben, oder sogar selbst manuell oder automatisch für den Nutzer entscheiden. Bei einer Vorgabe der Betriebsweise durch den Operator kann es zudem vorgegeben sein, dass der Nutzer a) diese Vorgabe ohne Rückfrage überschreiben kann, oder b) diese Vorgabe erst nach Rückfrage überschreiben kann, oder c) diese Vorgabe nur nach Eingabe eines Kennwortes überschreiben kann oder d) nicht überschreiben kann.

Zur Entscheidungshilfe übermittelt die Steuereinrichtung des Fahrzeuges die ermittelte Restreichweite mit gasförmigem Kraftstoff, gegebenenfalls unter Zuhilfenahme des Fahrprofils, der Routenplanung mit Höhenprofil, der Verkehrssituation sowie Verkehrsanlagen sowie der Witterung, dem Nutzer und zeigt die ihm an (Bezugszeichen 104.1 in Figur 1) oder die hierfür benötigten Daten werden telemetrisch an den Operateur fernübermittelt und angezeigt, sodass der Nutzer und/oder der örtlich getrennte Operateur diese Restreichweite ermitteln kann. Der Nutzer kann auch manuell eine exakte oder geschätzte Reichweite vorgeben. Wenn die Fahrzeugposition bei einer Nutzung eines telemetrischen Systems bekannt ist, so kann die Entfernung des Fahrzeugs zur nächsten Tankstelle dem Fahrzeug unter Zuhilfenahme einer geeigneten Vorrichtung (Routenplanung) übermittelt werden.

Dabei können gegebenenfalls auch Höhenprofile, Verkehrssituation sowie Verkehrsanlagen übermittelt und berücksichtigt werden. Zumindest der Tankdruck (101.4 in Figur 1) des Druckpolsters der Gasphase F_{gas} und Füllstand (101.3 in Figur 1) der flüssigen Phase F_{gas} werden bestimmt. Die Kenntnis über das verfügbare Gesamtvolumen des Kraftstoffs, das heißt das Volumen des Kraftstoffbehälters 101 abzüglich der Einbauten des Kraftstoffbehälters 101 wird vorausgesetzt.

Bei herkömmlichen Fahrzeugen liegt eine schlechtere Ausnutzung des zur Verfügung stehenden Volumens des Kraftstoffbehälters vor, da der vorliegende Druck des Gaspolsters der Betankungsvorgang nur bis zu einem zulässigen Gesamtdruck möglich ist. Ist der vorliegende Druck des Gaspolsters möglichst gering, kann mehr Kraftstoff zugeführt werden bis der zulässige Gesamtdruck erreicht ist. Das heißt auch, dass beim Tankvorgang, bei dem ein geringer Druck in dem Gaspolster vorliegt, kein Gasgesamtdruck über eine Druckentlastungsvorrichtung gegen die Atmosphäre abgegeben werden muss, da es in vorteilhafter Weise nicht zum Überschreiten des zulässigen Gesamtdrucks kommt. Es muss in vorteilhafter Weise kein Gas aus dem Gaspolster zurückgeführt oder aus dem Kraftstoffbehälter 101 abgeblasen werden. Beim Tankvorgang kann die höhere Dichte der flüssigen Phase K_{fl} ausgenutzt werden, sodass eine größere Menge an Gas, insbesondere LNG getankt werden kann. Da auf ein Abblasen der Gasphase verzichtet werden kann, wird insbesondere kein Methan freigesetzt.

Dadurch, dass kein Gas mittels einer Gaspendelleitung aus dem Kraftstoffbehälter 101 zurück in eine Betankungsanlage geführt werden muss, kann die Betankungsanlage einfacher und damit günstiger ausgeführt werden und es geht zudem in vorteilhafter Weise kein Gas verloren, wodurch Kosten gespart werden. Schließlich kann der Betankungsvorgang schneller durchgeführt werden, da der Druck (vergleiche 101.4 in Figur 1) im Gaspolster der gasförmigen Phase K_{gas} niedriger ist als ohne eine vorherige Reduzierung des Druckes im Gaspolster oberhalb der flüssigen Phase K_{fl}.

Mit dieser Vorgehensweise und dem Aufbau des Kraftstoffversorgungssystems 100 und der Energieumwandlungsvorrichtung 200 kann die Standzeit, das heißt die Zeit, bei der kein Ablassen beziehungsweise Abblasen von gasförmigem Kraftstoff aus dem Kraftstoffbehälter 101 notwendig ist, verlängert werden, wobei Standzeiten insbesondere durch geschickte Steuerung der Entnahme der Kraftstoffphasen des Kraftstoffs verlängert werden. Es muss kein Gas beim Überschreiten des zulässigen Gesamtdrucks über eine Druckentlastungsvorrichtung in die Atmosphäre abgegeben werden.

Das Kraftstoffversorgungssystem 100 ist somit erfindungsgemäß eingerichtet, um ein erfindungsgemäßes Verfahren zur Kraftstoffversorgung einer Energieumwandlungsvorrichtung 200 mit einem in einem Kraftstoffbehälter 101 gespeicherten verflüssigten gasförmigen Kraftstoff, der im Kraftstoffbehälter 101 in einer Flüssigphase K_{fl} und in einer Gasphase K_{gas} vorliegt und im Kraftstoffbehälter 101 ein Gaspolster bildet, auszuführen, wobei der Kraftstoffbehälter 101 Entnahmearmaturen 101.5, 101.6 zur getrennten Entnahme der Flüssigphase K_{fl} und der Gasphase K_{gas} und eine Kraftstoffzuführungsanlage 102 aufweist. Zu diesem Zweck umfasst das Kraftstoffversorgungssystem 100 insbesondere eine Steuereinrichtung S1, S2, S3, in der ein computerlesbarer Programmalgorithmus zur Ausführung des Verfahrens und gegebenenfalls erforderliche Kennfelder gespeichert sind.

Als verflüssigtes Gas kommen neben LNG (liquefied natural gas) und LPG (liquefied petroleum gas) auch H2 (Wasserstoff) und DME (Dimethylether) in Frage und können analog zu der Beschreibung verwendet werden.

Das Verfahren zum Betrieb von Energiewandlungsanlagen kann auch bei Motor-Generator-Sets zur Notstromversorgung eingesetzt werden. Möglich ist ein solcher Betrieb auch bei Anlagen zur Wärmeerzeugung, die mit den genannten Energieträgern betrieben werden. Dazu gehören auch Schiffe, die mit verflüssigten Gasen betrieben werden, wobei auch verflüssigtes Ethan zusätzlich zu dem oben genannten verflüssigten Gas zum Einsatz kommen kann.

Zur Vertiefung des erfindungsgemäßen Verfahrens werden abschließend noch einige erläuternde Beispiele beschrieben.

Bei dem erfindungsgemäßen Verfahren wird dem Nutzer, nachdem er eine Fahrstrecke von A nach B mit dem Fahrzeug, welches das erfindungsgemäße Kraftstoffversorgungssystem 100 umfasst, am Ende der Fahrstrecke mitgeteilt, dass der Druck im Gaspolster innerhalb des Kraftstoffbehälters 101 nicht auf den kleinsten minimalen Druck p_{MIN} abgebaut worden ist. Dem Nutzer wird dann ausgehend von dem erreichten Druck im Gaspolster des Kraftstoffbehälters 101 mitgeteilt, welche Standzeit dem Fahrzeug noch zur Verfügung steht, bis Kraftstoff aus dem Kraftstoffbehälter 101 abgelassen werden muss. Dabei ist beispielsweise vorgesehen, dass die Standzeitberechnung auf Temperaturvorhersagen am Standort für die nächsten Tage bei der Standzeitberechnung hinzugezogen wird. Der Nutzer könnte nun beispielsweise mit dem Wissen über die Standzeit, die dem Fahrzeug in der berechneten Prognose verbleibt, seine Planung hinsichtlich der Benutzung des Fahrzeuges dahingehend ändern, dass er das Fahrzeug innerhalb der angegebenen Standzeit rechtzeitig wieder in Betrieb nimmt. Eine andere Möglichkeit besteht darin, dass das Fahrzeug, bevor der maximale Druck erreicht wird, bei dem Kraftstoff aus dem Gaspolster abgelassen werden muss, wobei ein die Gasphase verbrauchendes Aggregat, wie etwa eine Heizvorrichtung oder eine Kühlvorrichtung des Fahrzeuges, einschaltet wird, um das Fahrzeug zu kühlen beziehungsweise aufzuheizen. Optional ist auch Abfackeln des Gases möglich. In allen Fällen wir der Bildung von explosiblen Atmosphären vorgebeugt. In Verbindung mit einer Vorplanung von Aktivitäten des Nutzers mit seinem Fahrzeug über das vorhandene Navigationssystem kann abgeglichen werden, zu welchem Zeitpunkt der Nutzer das Fahrzeug voraussichtlich wieder benutzen wird, und ob diese Benutzung innerhalb der noch vorhandenen Standzeit stattfinden wird. In diesem Zusammenhang ist auch eine entsprechende Einschaltung von Verbrauchern, welche den Druck im Druckpolster verringern, zu dem richtigen Zeitpunkt möglich.

Hat der Nutzer beispielsweise die "manuelle" Betriebsweise gewählt, so wird dem Nutzer mitgeteilt, dass er zu einem bestimmten Zeitpunkt das Ablassen von Kraftstoff aus dem Druckbehälter zulassen muss.

In einer anderen Vorgehensweise, bei der ein Nutzer die "manuelle" Betriebsweise ausgewählt hat, bei der keine automatische Nutzung des Kraftstoffes aus dem Gaspolster stattfindet, teilt das Fahrzeug dem Nutzer beispielsweise bei einer längeren Fahrt, die über das Navigationssystem 103 registriert worden ist, mit, zu welchem Zeitpunkt er in den "automatischen" Betrieb umschalten muss, damit beispielsweise am Ende der Fahrt von einem Ort A zu einem Ort B das Gaspolster seinen minimalen Druck p_{MIN} erreicht.

### Bezugszeichenliste

- 100: Kraftstoffversorgungssystem
- 200: Energieumwandlungsvorrichtung

- 101: Kraftstoffbehälter
- 101.1: Temperatur-Sensor
- 101.2: Temperatur-Sensor
- 101.3: Füllstands-Sensor
- 101.4: Druck-Sensor
- 101.5: Entnahmearmatur
- 101.6: Entnahmearmatur
- 101.7: Druck-Sensor

- 102: Kraftstoffzuführungsanlage

- K_{fl}: flüssige Phase des Kraftstoffes
- K_{gas}: gasförmige Phase des Kraftstoffes

- 103: Navigationsgerät

- S1: erstes Steuergerät / erster Steuerbaustein
- S2: zweites Steuergerät / zweiter Steuerbaustein
- S3: drittes Steuergerät / dritter Steuerbaustein
- S4: viertes Steuergerät / vierter Steuerbaustein

- 104: Anzeige
- 104.1: erstes Anzeigeelement
- 104.2: zweites Anzeigeelement

## Patentansprüche

1. Kraftstoffversorgungssystem (100) umfassend einen Kraftstoffbehälter (101) zur Speicherung eines verflüssigten gasförmigen Kraftstoffs, der im Kraftstoffbehälter (101) in einer Flüssigphase (K_{fl}) und in einer Gasphase (K_{gas}) vorliegt und im Kraftstoffbehälter (101) ein Gaspolster bildet, wobei der Kraftstoffbehälter (101) Entnahmearmaturen (101.5, 101.6) zur getrennten Entnahme der Flüssigphase (K_{fl}) und der Gasphase (K_{gas}) und eine Kraftstoffzuführungsanlage (102) aufweist, wobei die Entnahmearmaturen (101.5, 101.6) und die Kraftstoffzuführungsanlage (102) mit einer Steuereinrichtung (S1, S2, S3, S4, 103, 104) in direkter oder indirekter Verbindung stehen, wobei die Kraftstoffzuführungsanlage (102) den Kraftstoff aus dem Kraftstoffbehälter (101) einer Energieumwandlungsvorrichtung (200) eines Fahrzeuges zumisst, wobei die Steuereinrichtung (S1, S2, S3, S4, 103, 104) derart eingerichtet ist, dass der Kraftstoffzuführungsanlage (102) in Abhängigkeit eines voraussichtlichen Zeitpunktes eines Betankungsvorgangs vorrangig Kraftstoff in der Gasphase (K_{gas}) aus dem Gaspolster und erst nachrangig Kraftstoff in der Flüssigphase (K_{fl}) zugeführt wird, **dadurch gekennzeichnet, dass**
die Steuereinrichtung (S1, S2, S3, S4, 103, 104) ein Navigationssystem (103) umfasst, welches steuerungsseitig mit einem ersten Steuergerät (S1) und mit Anzeigen (104) in Verbindung steht, wobei ein erstes Anzeigeelement (104.1) die Entfernung bis zur nächsten Tankstelle des mit dem Kraftstoffversorgungssystem ausgestatteten Fahrzeuges und ein zweites Anzeigeelement (104.2) die Reichweite des mit dem Kraftstoffversorgungssystem ausgestatteten Fahrzeuges wahlweise
a) unter Berücksichtigung des Betriebes der Energieumwandlungsvorrichtung (200) mit der Gasphase (F_{gas}) und der Flüssigphase (F_{fl}) und/oder
b) unter Berücksichtigung des Betriebes der Energieumwandlungsvorrichtung (200) mit der Gasphase (F_{gas}) allein und/oder
c) unter Berücksichtigung des Betriebes der Energieumwandlungsvorrichtung (200) unter Berücksichtigung der Flüssigphase (F_{fl}) allein
anzeigt, die in dem ersten Steuergerät (S1) unter Berücksichtigung der Entfernung zur nächsten Tankstelle, die über das Navigationsgerät (103) bereitgestellt wird, berechnet wird, wobei das Navigationssystem (103) steuerungsseitig mit dem ersten Steuergerät (S1) in Verbindung steht, wobei in dem ersten Steuergerät (S1) die Reichweite bis zur nächsten Tankstelle mittels des Navigationssystems (103) in einer Routenplanung berechnet wird, und der Vorrang der Kraftstoffzuführung der Gasphase (K_{gas}) des Kraftstoffs aus dem Gaspolster in Abhängigkeit des voraussichtlichen Zeitpunktes des Betankungsvorgangs in einer automatischen Betriebsweise des Fahrzeuges ausgelöst oder in einer manuellen Betriebsweise durch den Nutzer ausgelöst oder in einer telemetrischen Betriebsweise durch einen Operateur fernausgelöst wird.

2. Kraftstoffversorgungssystem nach Anspruch 1, **dadurch gekennzeichnet, dass** die Steuereinrichtung (S1, S2, S3, S4, 103, 104) derart eingerichtet ist, dass der Druck des Gaspolsters der Gasphase (K_{gas}) bis zu einem voraussichtlichen Zeitpunkt eines Betankungsvorgangs auf einen vorgebbaren Druck, vorzugsweise einen minimalen Druck (p_{MIN}) reduziert ist, indem der Energieumwandlungsvorrichtung (200) über die Kraftstoffzuführungsanlage (102) in Abhängigkeit eines voraussichtlichen Zeitpunktes des Betankungsvorgangs vorrangig Kraftstoff in der Gasphase (K_{gas}) aus dem Gaspolster und nachrangig Kraftstoff in der Flüssigphase (K_{fl}) zugeführt wird.

3. Kraftstoffversorgungssystem (100) nach Anspruch 1, **dadurch gekennzeichnet, dass** die Steuereinrichtung (S1, S2, S3, S4, 103, 104) das erste Steuergerät (S1) umfasst, dem
• eine erfasste Temperatur der Gasphase (K_{gas}) in dem Kraftstoffbehälter (101) mittels eines Temperatur-Sensors (101.2) und
• ein erfasster Füllstand der Flüssigphase (K_{fl}) in dem Kraftstoffbehälter (101) mittels eines Füllstands-Sensors (101.3) und/oder ein Druck der Flüssigphase(K_{fl}) in dem Kraftstoffbehälter (101) zur Ermittlung des Füllstandes der Flüssigphase (K_{fl}) in dem Kraftstoffbehälter (101) mittels eines Druck-Sensors (101.7) und
• ein erfasster Druck der Gasphase (K_{gas}) in dem Kraftstoffbehälter (101) mittels eines Druck-Sensors (101.4) zugeführt wird, wobei im ersten Steuergerät (S1) ferner diejenige Kraftstoffmenge der Gasphase (K_{gas}) aus dem Gaspolster bestimmt wird, die aus dem Gaspolster entnommen werden muss, um in dem Gaspolster einen am Druck-Sensor (101.4) messbaren vorgebbaren Druck, vorzugsweise einen minimalen Druck (p_{MIN}), zu gewährleisten.

4. Kraftstoffversorgungssystem (100) nach den Ansprüchen 1 und 3, **dadurch gekennzeichnet, dass** die Steuereinrichtung (S1, S2, S3, S4, 103, 104) ein zweites Steuergerät (S2) umfasst, welches/welcher steuerungsseitig mit den Entnahmearmaturen (101.5, 101.6) und der Kraftstoffzuführungsanlage (102) in Verbindung steht, und das Steuergerät derart eingerichtet ist, die Entnahme der Gasphase (K_{gas}) aus dem Gaspolster und der Flüssigphase (K_{fl}) zu steuern, wobei das zweite Steuergerät (S2) steuerungsseitig mit dem ersten Steuergerät (S1in Verbindung steht.

5. Kraftstoffversorgungssystem (100) nach den Ansprüchen 1 und 3, **dadurch gekennzeichnet, dass** die Steuereinrichtung (S1, S2, S3, S4, 103, 104) ein drittes Steuergerät (S3) umfasst, welches/welcher steuerungsseitig mit einer Energieumwandlungsvorrichtung (200) und dem ersten Steuergerät (S1) verbunden ist, wobei in dem dritten Steuergerät (S3) lastpunktanhängig der aktuelle Bedarf der Energieumwandlungsvorrichtung (200) an Kraftstoff (K_{fl}, K_{gas}) ermittelt und dem ersten Steuergerät (S1) mitgeteilt wird.

6. Kraftstoffversorgungssystem (100) nach Anspruch 1, **dadurch gekennzeichnet, dass** in dem ersten Steuergerät (S1) ein Betankungsverhalten registriert und bei der vorrangigen Kraftstoffzuführung der Gasphase (K_{gas}) des Kraftstoffs aus dem Gaspolster zu der Kraftstoffzuführungsanlage (102) berücksichtigt wird.

7. Kraftstoffversorgungssystem (100) nach Anspruch 1, **dadurch gekennzeichnet, dass** dem ersten Steuergerät (S1) der Steuereinrichtung (S1, S2, S3, S4, 103, 104)
• eine erfasste Temperatur der Gasphase (K_{gas}) in dem Kraftstoffbehälter (101) mittels eines Temperatur-Sensors (101.2) und
• ein erfasster Füllstand der Flüssigphase (K_{fl}) in dem Kraftstoffbehälter (101) mittels eines Füllstands-Sensors (101.3) und/oder ein Druck der Flüssigphase (K_{fl}) in dem Kraftstoffbehälter (101) zur Ermittlung des Füllstandes der Flüssigphase (K_{fl}) in dem Kraftstoffbehälter (101) mittels eines Druck-Sensors (101.7) und
• ein erfasster Druck der Gasphase (K_{gas}) in dem Kraftstoffbehälter (101) mittels eines Druck-Sensors (101.4)
zugeführt wird, wobei im ersten Steuergerät (S1) ferner diejenige Kraftstoffmenge der Gasphase (K_{gas}) aus dem Gaspolster bestimmt wird, die bis zum voraussichtlichen Zeitpunkt des nächsten Betankungsvorgangs aus dem Gaspolster entnommen werden muss, um in dem Gaspolster den an dem Druck-Sensor (101.4) messbaren vorgebbaren Druck, vorzugsweise einen minimalen Druck (p_{MIN}), zu gewährleisten.

8. Kraftstoffversorgungssystem (100) nach Anspruch 1 und 3, **dadurch gekennzeichnet, dass** die Steuereinrichtung (S1, S2, S3, S4, 103, 104) eine computergestützte Benutzerschnittstelle oder Benutzeroberfläche umfasst, welche mittels eines vierten Steuergerätes (S4) gesteuert wird, wobei das vierte Steuergerät (S4) steuerungsseitig mit dem ersten Steuergerät (S1) in Verbindung steht, wobei von einem Benutzer über die Benutzeroberfläche der Benutzerschnittstelle wahlweise die automatische oder die manuelle oder die telemetrische Betriebsweise auswählbar ist, wobei
• bei der automatischen Betriebsweise eine automatische vorrangige Nutzung des Kraftstoffes der Gasphase (K_{gas}) aus dem Gaspolster, oder
• bei der manuellen Betriebsweise eine manuelle vorrangige Nutzung des Kraftstoffes der Gasphase (K_{gas}) aus dem Gaspolster, oder
• bei der telemetrischen Betriebsweise eine telemetrische vorrangige Nutzung des Kraftstoffes der Gasphase (K_{gas}) aus dem Gaspolster
stattfindet.

9. Verfahren zur Kraftstoffversorgung einer Energieumwandlungsvorrichtung (200) mit einem in einem Kraftstoffbehälter (101) gespeicherten verflüssigten gasförmigen Kraftstoff, der im Kraftstoffbehälter (101) in einer Flüssigphase (K_{fl}) und in einer Gasphase (K_{gas}) vorliegt und im Kraftstoffbehälter (101) ein Gaspolster bildet, wobei der Kraftstoffbehälter (101) Entnahmearmaturen (101.5, 101.6) zur getrennten Entnahme der Flüssigphase (K_{fl}) und der Gasphase (K_{gas}) und eine Kraftstoffzuführungsanlage (102) aufweist, wobei die Entnahmearmaturen (101.5, 101.6) und die Kraftstoffzuführungsanlage (102) mit einer Steuereinrichtung (S1, S2, S3, S4, 103, 104) in direkter oder indirekter Verbindung stehen, wobei die Kraftstoffzuführungsanlage (102) den Kraftstoff aus dem Kraftstoffbehälter (101) einer Energieumwandlungsvorrichtung (200) eines Fahrzeuges zumisst, wobei der Kraftstoffzuführungsanlage (102) in Abhängigkeit eines voraussichtlichen Zeitpunktes eines Betankungsvorgangs vorrangig Kraftstoff in der Gasphase (K_{gas}) aus dem Gaspolster und erst nachrangig Kraftstoff in der Flüssigphase (K_{fl}) zugeführt wird, **dadurch gekennzeichnet, dass**
eine "automatische" oder eine "manuelle" oder eine "telemetrische" Betriebsweise ausgewählt wird, wobei
• bei einer gewählten automatischen Betriebsweise automatisch eine vorrangige Nutzung des Kraftstoffes der Gasphase (K_{gas}) aus dem Gaspolster ausgelöst, oder
• bei einer manuellen Betriebsweise eine manuelle vorrangige Nutzung des Kraftstoffes der Gasphase (K_{gas}) aus dem Gaspolster ausgelöst, oder
• bei einer telemetrischen Betriebsweise telemetrisch eine vorrangige Nutzung des Kraftstoffes der Gasphase (K_{gas}) aus dem Gaspolster fernausgelöst
wird, und
die Reichweite bis zur nächsten Tankstelle berechnet wird, und der Vorrang der Kraftstoffzuführung der Gasphase (K_{gas}) des Kraftstoffs aus dem Gaspolster in Abhängigkeit des voraussichtlichen Zeitpunktes des Betankungsvorgangs in einer automatischen Betriebsweise des Fahrzeuges automatisch ausgelöst oder in einer manuellen Betriebsweise manuelle durch den Nutzer ausgelöst oder in einer telemetrischen Betriebsweise durch einen Operateur fernausgelöst wird.

10. Verfahren nach Anspruch 9, **dadurch gekennzeichnet, dass** der Druck des Gaspolsters der Gasphase (K_{gas}) bis zu einem voraussichtlichen Zeitpunkt eines Betankungsvorgangs auf einen vorgebbaren Druck, vorzugsweise einen minimalen Druck (p_{MIN}) reduziert wird, indem der Energieumwandlungsvorrichtung (200) über die Kraftstoffzuführungsanlage (102) in Abhängigkeit des voraussichtlichen Zeitpunktes des Betankungsvorgangs vorrangig Kraftstoff in der Gasphase (K_{gas}) aus dem Gaspolster und nachrangig Kraftstoff in der Flüssigphase (K_{fl}) zugeführt wird.

11. Verfahren nach Anspruch 10, **dadurch gekennzeichnet, dass** eine Reichweite des mit dem Kraftstoffversorgungssystem (100) ausgestatteten Fahrzeuges wahlweise
• unter Berücksichtigung des Betriebes der Energieumwandlungsvorrichtung (200) mit der Gasphase (F_{gas}) und der Flüssigphase (F_{fl}) und/oder
• unter Berücksichtigung des Betriebes der Energieumwandlungsvorrichtung (200) mit der Gasphase (F_{gas}) allein und/oder
• unter Berücksichtigung des Betriebes der Energieumwandlungsvorrichtung (200) unter Berücksichtigung der Flüssigphase (F_{fl}) allein
anzeigt wird, die unter Berücksichtigung der Entfernung zur nächsten Tankstelle berechnet wird.

12. Verfahren nach Anspruch 10, **dadurch gekennzeichnet, dass** ein Betankungsverhalten registriert und bei der vorrangigen Kraftstoffzuführung der Gasphase (K_{gas}) des Kraftstoffs aus dem Gaspolster zu der Kraftstoffzuführungsanlage (102) berücksichtigt wird.

13. Verfahren nach einem der Ansprüche 10 oder 11, **dadurch gekennzeichnet, dass** der Kraftstoffzuführungsanlage (102) der Energieumwandlungsvorrichtung (200) mittels der Entnahmearmaturen (101.5, 101.6) zur getrennten Entnahme der Flüssigphase (K_{fl}) und der Gasphase (K_{gas}) aus dem Kraftstoffbehälter (101)
• in einem Wechselbetrieb oder
• in einem Mischbetrieb
Kraftstoff in der Gasphase (K_{gas}) und/oder der Flüssigphase (K_{fl}) zugeführt wird.

## Claims

1. Fuel supply system (100) comprising a fuel tank (101) for storing a liquefied gaseous fuel which is present in the fuel tank (101) in a liquid phase (K_{fl}) and in a gas phase (K_{gas}) and forms a gas cushion in the fuel tank (101), the fuel tank (101) having extraction fittings (101.5, 101.6) for separately extracting the liquid phase (K_{fl}) and the gas phase (K_{gas}), and a fuel feed system (102), the extraction fittings (101.5, 101.6) and the fuel supply feed system (102) being directly or indirectly connected to a control device (S1, S2, S3, S4, 103, 104), the fuel feed system (102) metering the fuel from the fuel tank (101) to an energy conversion apparatus (200) of a vehicle, the control device (S1, S2, S3, S4, 103, 104) being designed in such a way that the fuel feed system (102) is supplied with fuel in the gas phase (K_{gas}) from the gas cushion as a priority and only secondarily supplied with fuel in the liquid phase (K_{fl}), depending on an expected time of a refueling process, **characterized in that**
the control device (S1, S2, S3, S4, 103, 104) comprises a navigation system (103) which is connected on the control side to a first control unit (S1) and to displays (104), a first display element (104.1) displaying the distance to the next filling station of the vehicle equipped with the fuel supply system, and a second display element (104.2) displaying the range of the vehicle equipped with the fuel supply system, optionally
a) taking into account the operation of the energy conversion apparatus (200) with the gas phase (F_{gas}) and the liquid phase (F_{fl}) and/or
b) taking into account the operation of the energy conversion apparatus (200) with the gas phase (F_{gas}) alone and/or
c) taking into account the operation of the energy conversion apparatus (200) taking into account the liquid phase (F_{fl}) alone,
which is calculated in the first control unit (S1) taking into account the distance to the next filling station, which is provided via the navigation unit (103), the navigation system (103) being connected on the control side to the first control unit (S1), the range to the next filling station being calculated in the first control unit (S1) by means of the navigation system (103) in a route planning process, and the priority of the fuel supply of the gas phase (K_{gas}) of the fuel from the gas cushion being triggered in an automatic operating mode of the vehicle, depending on the expected time of the refueling process, or triggered by the user in a manual operating mode, or remotely triggered by an operator in a telemetric operating mode.

2. Fuel supply system according to claim 1, **characterized in that** the control device (S1, S2, S3, S4, 103, 104) is designed in such a way that the pressure of the gas cushion of the gas phase (K_{gas}) is reduced to a predeterminable pressure, preferably a minimum pressure (p_{MIN}), up to an expected time of a refueling process, **in that** the energy conversion apparatus (200), via the fuel feed system (102), is supplied with fuel in the gas phase (K_{gas}) from the gas cushion as a priority and secondarily supplied with fuel in the liquid phase (K_{fl}), depending on an expected time of the refueling process.

3. Fuel supply system (100) according to claim 1, **characterized in that** the control device (S1, S2, S3, S4, 103, 104) comprises the first control unit (S1) which is supplied with
• a detected temperature of the gas phase (K_{gas}) in the fuel tank (101) by means of a temperature sensor (101.2), and
• a detected fill level of the liquid phase (K_{fl}) in the fuel tank (101) by means of a fill level sensor (101.3), and/or a pressure of the liquid phase (K_{fl}) in the fuel tank (101), for determining the fill level of the liquid phase (K_{fl}) in the fuel tank (101), by means of a pressure sensor (101.7), and
• a detected pressure of the gas phase (K_{gas}) in the fuel tank (101) by means of a pressure sensor (101.4), the amount of fuel in the gas phase (K_{gas}) from the gas cushion that must be extracted from the gas cushion further being determined in the first control unit (S1), in order to ensure a predeterminable pressure in the gas cushion that can be measured on the pressure sensor (101.4), preferably a minimum pressure (p_{MIN}).

4. Fuel supply system (100) according to claim 1 and claim 3,
**characterized in that** the control device (S1, S2, S3, S4, 103, 104) comprises a second control unit (S2) which is connected on the control side to the extraction fittings (101.5, 101.6) and the fuel feed system (102), and the control unit is designed to control the extraction of the gas phase (K_{gas}) from the gas cushion and the liquid phase (K_{fl}), the second control unit (S2) being connected on the control side to the first control unit (S1).

5. Fuel supply system (100) according to claim 1 and claim 3,
**characterized in that** the control device (S1, S2, S3, S4, 103, 104) comprises a third control unit (S3) which is connected on the control side to an energy conversion apparatus (200) and the first control unit (S1), the current requirement of the energy conversion apparatus (200) for fuel (K_{fl}, K_{gas}) being ascertained in the third control unit (S3) as a function of the load point and communicated to the first control unit (S1).

6. Fuel supply system (100) according to claim 1, **characterized in that** a refueling behavior is registered in the first control unit (S1) and is taken into account in the priority fuel supply of the gas phase (K_{gas}) of the fuel from the gas cushion to the fuel feed system (102).

7. Fuel supply system (100) according to claim 1, **characterized in that** the first control unit (S1) of the control device (S1, S2, S3, S4, 103, 104) is supplied with,
• a detected temperature of the gas phase (K_{gas}) in the fuel tank (101) by means of a temperature sensor (101.2), and
• a detected fill level of the liquid phase (K_{fl}) in the fuel tank (101) by means of a fill level sensor (101.3), and/or a pressure of the liquid phase (K_{fl}) in the fuel tank (101), for determining the fill level of the liquid phase (K_{fl}) in the fuel tank (101), by means of a pressure sensor (101.7), and
• a detected pressure of the gas phase (K_{gas}) in the fuel tank (101) by means of a pressure sensor (101.4),
the amount of fuel in the gas phase (K_{gas}) from the gas cushion that must be extracted from the gas cushion further being determined in the first control unit (S1), in order to ensure a predeterminable pressure in the gas cushion that can be measured on the pressure sensor (101.4), preferably a minimum pressure (p_{MIN}).

8. Fuel supply system (100) according to claim 1 and claim 3,
**characterized in that** the control device (S1, S2, S3, S4, 103, 104) comprises a computer-aided user interface or user surface which is controlled by means of a fourth control unit (S4), the fourth control unit (S4) being connected on the control side to the first control unit (S1), the automatic or the manual or the telemetric operating mode being optionally selectable by a user via the user surface of the user interface,
• an automatic priority use of the fuel in the gas phase (K_{gas}) from the gas cushion taking place in the automatic operating mode, or
• a manual priority use of the fuel in the gas phase (K_{gas}) from the gas cushion taking place in the manual operating mode, or
• a telemetric priority use of the fuel in the gas phase (K_{gas}) from the gas cushion taking place in the telemetric operating mode.

9. Method for supplying fuel to an energy conversion apparatus (200) having a liquefied gaseous fuel stored in a fuel tank (101), which fuel is present in the fuel tank (101) in a liquid phase (K_{fl}) and in a gas phase (K_{gas}) and forms a gas cushion in the fuel tank (101), the fuel tank (101) having extraction fittings (101.5, 101.6) for separately extracting the liquid phase (K_{fl}) and the gas phase (K_{gas}), and a fuel feed system (102), the extraction fittings (101.5, 101.6) and the fuel feed system (102) being directly or indirectly connected to a control device (S1, S2, S3, S4, 103, 104), the fuel supply system (102) metering the fuel from the fuel tank (101) to an energy conversion apparatus (200) of a vehicle, the fuel feed system (102) being supplied with fuel in the gas phase (K_{gas}) from the gas cushion as a priority and only secondarily supplied with fuel in the liquid phase (K_{fl}), depending on an expected time of a refueling process, **characterized in that**
an "automatic" or a "manual" or a "telemetric" operating mode is selected,
• a priority use of the fuel in the gas phase (K_{gas}) from the gas cushion being automatically triggered when an automatic operating mode is selected, or
• a manual priority use of the fuel in the gas phase (K_{gas}) from the gas cushion being triggered in a manual operating mode, or
• a priority use of the fuel in the gas phase (K_{gas}) from the gas cushion being telemetrically remotely triggered in a telemetric operating mode,
and
the range to the next filling station being calculated, and the priority of the fuel supply of the gas phase (K_{gas}) of the fuel from the gas cushion being triggered automatically, depending on the expected time of the refueling process, in an automatic operating mode of the vehicle, or manually triggered by the user in a manual operating mode, or remotely triggered by an operator in a telemetric operating mode.

10. Method according to claim 9, **characterized in that** the pressure of the gas cushion of the gas phase (K_{gas}) is reduced to a predeterminable pressure, preferably a minimum pressure (p_{MIN}), up to an expected time of a refueling process, **in that** the energy conversion apparatus (200), via the fuel feed system (102), is supplied with fuel in the gas phase (K_{gas}) from the gas cushion as a priority and secondarily supplied with fuel in the liquid phase (K_{fl}), depending on an expected time of the refueling process.

11. Method according to claim 10, **characterized in that** a range of the vehicle equipped with the fuel supply system (100) is displayed, optionally
• taking into account the operation of the energy conversion apparatus (200) with the gas phase (F_{gas}) and the liquid phase (F_{fl}), and/or
• taking into account the operation of the energy conversion apparatus (200) with the gas phase (F_{gas}) alone, and/or
• taking into account the operation of the energy conversion apparatus (200) taking into account the liquid phase (F_{fl}) alone,
which is calculated taking into account the distance to the nearest filling station.

12. Method according to claim 10, **characterized in that** a refueling behavior is registered and taken into account in the priority fuel supply of the gas phase (K_{gas}) of the fuel from the gas cushion to the fuel feed system (102).

13. Method according to either claim 10 or claim 11, **characterized in that** fuel in the gas phase (K_{gas}) and/or the liquid phase (K_{fl}) is supplied to the fuel feed system (102) of the energy conversion apparatus (200) by means of the extraction fittings (101.5, 101.6) for separately extracting the liquid phase (K_{fl}) and the gas phase (K_{gas}) from the fuel tank (101)
• in an alternating operation or
• in a mixed operation.

## Revendications

1. Système d'approvisionnement en carburant (100) comprenant un réservoir de carburant (101) pour le stockage d'un carburant gazeux liquéfié qui est présent dans le réservoir de carburant (101) dans une phase liquide (K_{fl}) et dans une phase gazeuse (K_{gas}) et qui forme un coussin de gaz dans le réservoir de carburant (101), dans lequel le réservoir de carburant (101) présente des robinets de prélèvement (101.5, 101.6) pour le prélèvement séparé de la phase liquide (K_{fl}) et de la phase gazeuse (K_{gas}) et une installation d'alimentation en carburant (102), dans lequel les robinets de prélèvement (101.5, 101.6) et l'installation d'alimentation en carburant (102) sont en liaison directe ou indirecte avec un équipement de commande (S1, S2, S3, S4, 103, 104), dans lequel l'installation d'alimentation en carburant (102) dose le carburant provenant du réservoir de carburant (101) vers un dispositif de conversion d'énergie (200) d'un véhicule, dans lequel l'équipement de commande (S1, S2, S3, S4, 103, 104) est conçu de telle sorte que l'installation d'alimentation en carburant (102) est alimentée en priorité en carburant en phase gazeuse (K_{gas}) provenant du coussin de gaz et seulement en second lieu en carburant en phase liquide (K_{fl}), en fonction d'un moment probable d'une opération de ravitaillement, **caractérisé en ce que**
l'équipement de commande (S1, S2, S3, S4, 103, 104) comprend un système de navigation (103) qui est connecté côté commande à un premier appareil de commande (S1) et à des affichages (104), dans lequel un premier élément d'affichage (104.1) affiche la distance jusqu'à la station-service la plus proche du véhicule doté du système d'approvisionnement en carburant et un second élément d'affichage (104.2) affiche l'autonomie du véhicule doté du système d'approvisionnement en carburant, au choix
a) en tenant compte du fonctionnement du dispositif de conversion d'énergie (200) avec la phase gazeuse (F_{gas}) et la phase liquide (F_{fl}), et/ou
b) en tenant compte du fonctionnement du dispositif de conversion d'énergie (200) avec la phase gazeuse (F_{gas}) seule et/ou
c) en tenant compte du fonctionnement du dispositif de conversion d'énergie (200) en tenant compte de la phase liquide (F_{fl}) seule
laquelle autonomie est calculée dans le premier appareil de commande (S1) en tenant compte de la distance jusqu'à la station-service la plus proche, laquelle distance est fournie par l'intermédiaire de l'appareil de navigation (103), dans lequel le système de navigation (103) est connecté côté commande au premier appareil de commande (S1), dans lequel l'autonomie jusqu'à la station-service la plus proche est calculée dans le premier appareil de commande (S1) à l'aide du système de navigation (103) dans une planification d'itinéraire, et la priorité de l'alimentation en carburant de la phase gazeuse (K_{gas}) du carburant provenant du coussin de gaz est déclenchée en fonction du moment probable de l'opération de ravitaillement dans un mode de fonctionnement automatique du véhicule ou est déclenchée dans un mode de fonctionnement manuel par l'utilisateur ou est déclenchée à distance dans un mode de fonctionnement télémétrique par un opérateur.

2. Système d'approvisionnement en carburant selon la revendication 1, **caractérisé en ce que** l'équipement de commande (S1, S2, S3, S4, 103, 104) est conçu de telle sorte que la pression du coussin de gaz de la phase gazeuse (K_{gas}) est réduite à une pression pouvant être prédéterminée, de préférence à une pression minimale (p_{MIN}), jusqu'à un moment probable d'une opération de ravitaillement, en alimentant le dispositif de conversion d'énergie (200), par l'intermédiaire de l'installation d'alimentation en carburant (102), en priorité en carburant en phase gazeuse (K_{gas}) provenant du coussin de gaz et en second lieu en carburant en phase liquide (K_{fl}), en fonction d'un moment probable de l'opération de ravitaillement.

3. Système d'approvisionnement en carburant (100) selon la revendication 1, **caractérisé en ce que** l'équipement de commande (S1, S2, S3, S4, 103, 104) comprend le premier appareil de commande (S1), qui est alimenté avec
• une température détectée de la phase gazeuse (K_{gas}) dans le réservoir de carburant (101) à l'aide d'un capteur de température (101.2) et
• un niveau de remplissage détecté de la phase liquide (K_{fl}) dans le réservoir de carburant (101) à l'aide d'un capteur de niveau de remplissage (101.3) et/ou une pression de la phase liquide (K_{fl}) dans le réservoir de carburant (101) permettant de déterminer le niveau de remplissage de la phase liquide (K_{fl}) dans le réservoir de carburant (101) à l'aide d'un capteur de pression (101.7) et
• une pression détectée de la phase gazeuse (K_{gas}) dans le réservoir de carburant (101) à l'aide d'un capteur de pression (101.4), dans lequel, dans le premier appareil de commande (S1), est en outre déterminée la quantité de carburant de la phase gazeuse (K_{gas}) provenant du coussin de gaz qui doit être prélevée du coussin de gaz afin de garantir dans le coussin de gaz une pression pouvant être prédéfinie et mesurable sur le capteur de pression (101.4), de préférence une pression minimale (p_{MIN}).

4. Système d'approvisionnement en carburant (100) selon les revendications 1 et 3, **caractérisé en ce que** l'équipement de commande (S1, S2, S3, S4, 103, 104) comprend un deuxième appareil de commande (S2) qui est relié côté commande aux robinets de prélèvement (101.5, 101.6) et à l'installation d'alimentation en carburant (102), et l'appareil de commande est conçu de manière à commander le prélèvement de la phase gazeuse (K_{gas}) provenant du coussin de gaz et de la phase liquide (K_{fl}), dans lequel le deuxième appareil de commande (S2) est connecté côté commande au premier appareil de commande (S1).

5. Système d'approvisionnement en carburant (100) selon les revendications 1 et 3, **caractérisé en ce que** l'équipement de commande (S1, S2, S3, S4, 103, 104) comprend un troisième appareil de commande (S3) qui est connecté côté commande à un dispositif de conversion d'énergie (200) et au premier appareil de commande (S1), dans lequel le besoin actuel du dispositif de conversion d'énergie (200) en carburant (K_{fl}, K_{gas}) est déterminé dans le troisième appareil de commande (S3) en fonction du point de charge et est communiqué au premier appareil de commande (S1).

6. Système d'approvisionnement en carburant (100) selon la revendication 1, **caractérisé en ce qu'**un comportement de ravitaillement est enregistré dans le premier appareil de commande (S1) et est pris en compte lors de l'alimentation prioritaire en carburant de la phase gazeuse (K_{gas}) du carburant provenant du coussin de gaz vers l'installation d'alimentation en carburant (102).

7. Système d'approvisionnement en carburant (100) selon la revendication 1, **caractérisé en ce que** le premier appareil de commande (S1) de l'équipement de commande (S1, S2, S3, S4, 103, 104) est alimenté avec
• une température détectée de la phase gazeuse (K_{gas}) dans le réservoir de carburant (101) à l'aide d'un capteur de température (101.2) et
• un niveau de remplissage détecté de la phase liquide (K_{fl}) dans le réservoir de carburant (101) à l'aide d'un capteur de niveau de remplissage (101.3) et/ou une pression de la phase liquide (K_{fl}) dans le réservoir de carburant (101) permettant de déterminer le niveau de remplissage de la phase liquide (K_{fl}) dans le réservoir de carburant (101) à l'aide d'un capteur de pression (101.7) et
• une pression détectée de la phase gazeuse (K_{gas}) dans le réservoir de carburant (101) à l'aide d'un capteur de pression (101.4)
dans lequel, dans le premier appareil de commande (S1), est en outre déterminée la quantité de carburant de la phase gazeuse (K_{gas}) provenant du coussin de gaz qui doit être prélevée du coussin de gaz jusqu'au moment probable de l'opération de ravitaillement suivante afin de garantir dans le coussin de gaz la pression pouvant être prédéfinie et mesurable sur le capteur de pression (101.4), de préférence une pression minimale (p_{MIN}).

8. Système d'approvisionnement en carburant (100) selon les revendications 1 et 3, **caractérisé en ce que** l'équipement de commande (S1, S2, S3, S4, 103, 104) comprend une interface d'utilisateur ou une interface utilisateur assistée par ordinateur, laquelle est commandée à l'aide d'un quatrième appareil de commande (S4), dans lequel le quatrième appareil de commande (S4) est connecté côté commande au premier appareil de commande (S1), dans lequel le mode de fonctionnement automatique ou manuel ou télémétrique peut être sélectionné au choix par un utilisateur par l'intermédiaire de l'interface d'utilisateur de l'interface utilisateur, dans lequel
• lors du mode de fonctionnement automatique, une utilisation prioritaire automatique du carburant de la phase gazeuse (K_{gas}) provenant du coussin de gaz a lieu, ou
• lors du mode de fonctionnement manuel, une utilisation prioritaire manuelle du carburant de la phase gazeuse (K_{gas}) provenant du coussin de gaz a lieu, ou
• lors du mode de fonctionnement télémétrique, une utilisation prioritaire télémétrique du carburant de la phase gazeuse (K_{gas}) provenant du coussin de gaz a lieu.

9. Procédé pour l'approvisionnement en carburant d'un dispositif de conversion d'énergie (200) avec un carburant gazeux liquéfié stocké dans un réservoir de carburant (101), lequel carburant gazeux liquéfié est présent dans le réservoir de carburant (101) dans une phase liquide (K_{fl}) et dans une phase gazeuse (K_{gas}) et forme un coussin de gaz dans le réservoir de carburant (101), dans lequel le réservoir de carburant (101) présente des robinets de prélèvement (101.5, 101.6) pour le prélèvement séparé de la phase liquide (K_{fl}) et de la phase gazeuse (K_{gas}) et une installation d'alimentation en carburant (102), dans lequel les robinets de prélèvement (101.5, 101.6) et l'installation d'alimentation en carburant (102) sont en liaison directe ou indirecte avec un équipement de commande (S1, S2, S3, S4, 103, 104), dans lequel l'installation d'alimentation en carburant (102) dose le carburant provenant du réservoir de carburant (101) vers un dispositif de conversion d'énergie (200) d'un véhicule, dans lequel l'installation d'alimentation en carburant (102) est alimentée en priorité en carburant en phase gazeuse (K_{gas}) provenant du coussin de gaz et seulement en second lieu en carburant en phase liquide (K_{fl}), en fonction d'un moment probable d'une opération de ravitaillement, **caractérisé en ce que**
un mode de fonctionnement « automatique » ou « manuel » ou « télémétrique » est sélectionné, dans lequel
• lors d'un mode de fonctionnement automatique sélectionné, une utilisation prioritaire du carburant de la phase gazeuse (K_{gas}) provenant du coussin de gaz est déclenchée de manière automatique, ou
• lors d'un mode de fonctionnement manuel, une utilisation prioritaire manuelle du carburant de la phase gazeuse (K_{gas}) provenant du coussin de gaz est déclenchée, ou
• lors d'un mode de fonctionnement télémétrique, une utilisation prioritaire du carburant de la phase gazeuse (K_{gas}) provenant du coussin de gaz est déclenchée à distance de manière télémétrique,
et
l'autonomie jusqu'à la station-service la plus proche est calculée, et la priorité de l'alimentation en carburant de la phase gazeuse (K_{gas}) du carburant provenant du coussin de gaz est déclenchée automatiquement en fonction du moment probable de l'opération de ravitaillement dans un mode de fonctionnement automatique du véhicule ou est déclenchée manuellement par l'utilisateur dans un mode de fonctionnement manuel ou est déclenchée à distance par un opérateur dans un mode de fonctionnement télémétrique.

10. Procédé selon la revendication 9, **caractérisé en ce que** la pression du coussin de gaz de la phase gazeuse (K_{gas}) est réduite à une pression pouvant être prédéterminée, de préférence à une pression minimale (p_{MIN}), jusqu'à un moment probable d'une opération de ravitaillement, en alimentant le dispositif de conversion d'énergie (200), par l'intermédiaire de l'installation d'alimentation en carburant (102), en priorité en carburant en phase gazeuse (K_{gas}) provenant du coussin de gaz et en second lieu en carburant en phase liquide (K_{fl}), en fonction du moment probable de l'opération de ravitaillement.

11. Procédé selon la revendication 10, **caractérisé en ce qu'**une autonomie du véhicule doté du système d'approvisionnement en carburant (100) est affichée au choix
• en tenant compte du fonctionnement du dispositif de conversion d'énergie (200) avec la phase gazeuse (F_{gas}) et la phase liquide (F_{fl}) et/ou
• en tenant compte du fonctionnement du dispositif de conversion d'énergie (200) avec la phase gazeuse (F_{gas}) seule et/ou
• en tenant compte du fonctionnement du dispositif de conversion d'énergie (200) en tenant compte de la phase liquide (F_{fl}) seule,
laquelle autonomie est calculée en fonction de la distance jusqu'à la station-service la plus proche.

12. Procédé selon la revendication 10, **caractérisé en ce qu'**un comportement de ravitaillement est enregistré et pris en compte lors de l'alimentation prioritaire en carburant de la phase gazeuse (K_{gas}) du carburant provenant du coussin de gaz vers l'installation d'alimentation en carburant (102).

13. Procédé selon l'une des revendications 10 ou 11, **caractérisé en ce que** l'installation d'alimentation en carburant (102) du dispositif de conversion d'énergie (200) est alimentée, à l'aide des robinets de prélèvement (101.5, 101.6) pour le prélèvement séparé de la phase liquide (K_{fl}) et de la phase gazeuse (K_{gas}) provenant du réservoir de carburant (101)
· dans un fonctionnement alterné ou
· dans un fonctionnement mixte
en carburant en phase gazeuse (K_{gas}) et/ou en phase liquide (K_{fl}).
